# EUROPEAN PATENT SPECIFICATION

(11) **EP 1 083 337 B1**
(45) Date of publication and mention of the grant of the patent: **24.01.2007**
(21) Application number: 00118896.0
(22) Date of filing: 31.08.2000
(51) Int. Cl.: F15B 9/04, F15B 9/14, F15B 11/05, E02F 9/22

(54) **Hydraulic drive apparatus**
Hydraulische Antriebseinheit
Appareil hydraulique de propulsion

(30) Priority: 31.08.1999 JP 24618399; 13.01.2000 JP 2000004948; 17.01.2000 JP 2000007386
(43) Date of publication of application: 14.03.2001
(73) Proprietor: Nabtesco Corporation, Tokyo (JP)
(72) Inventor: Kodama, Haruo, Gifu Plant No.2, Fuwa-gun, Gifu (JP); Shimizu, Nobuaki, Gifu Plant No.2, Fuwa-gun, Gifu (JP); Asano, Youji, Gifu Plant No.2, Fuwa-gun, Gifu (JP)
(74) Representative: Grünecker, Kinkeldey, Stockmair & Schwanhäusser Anwaltssozietät

(56) References cited:
- EP-A- 0 796 952
- US-A- 3 621 762

## Description

### BACKGROUND OF THE INVENTION

The present invention relates to a hydraulic drive apparatus used for hydraulic shovels, cranes, asphalt finishers, machine tools and the like according to the preamble of claim 1. Such an apparatus is known from EP0 796 952 A1. More particularly, the invention relates to a hydraulic drive apparatus that controls a pressure of working oil supplied from a hydraulic pump to be higher than a load pressure of a hydraulic motor by a predetermined pressure.

A technique to be described hereunder is known for a hydraulic pressure circuit for controlling an electro-hydraulic servomechanism.

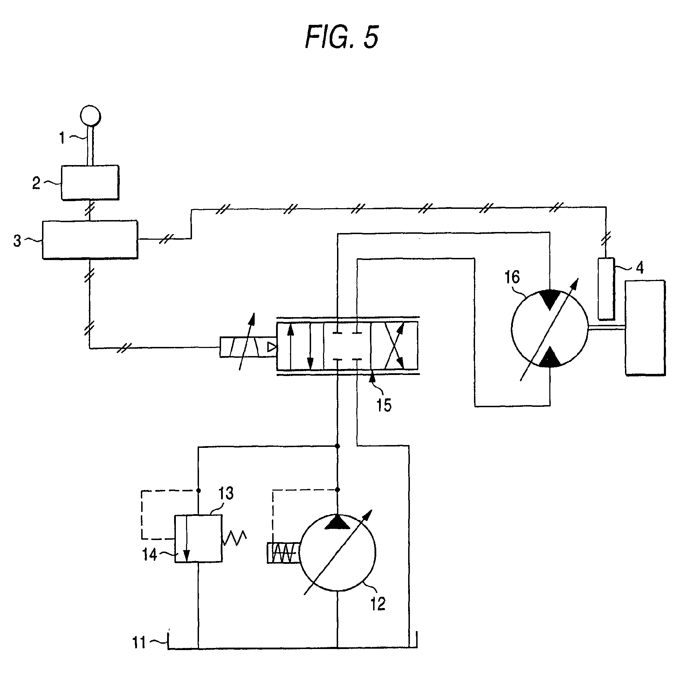

In Fig. 5, reference numeral 1 is an operation lever which inputs a desired operation position by varying an angle of the lever; and 2 is an operation-position signal outputting means which generates a voltage (operation position signal) depending on an input angle of the operation lever 1 and outputs the voltage to a controller 3. The operation position input by the operation lever 1 is converted by the operation-position signal outputting means 2 into the operation position signal to be output to the controller 3.

A feedback signal is fed back to the controller 3, from a speed detector 4 which is attached to an output portion of a hydraulic motor 16 to detects a speed (an output rotational number) of the output portion.

The hydraulic pump 12 feeds working oil from a tank 11 to a hydraulic motor 16. During the flow of the working oil from the tank 11 to the hydraulic motor 16, the working oil is selected in its flow or its flow is controlled by a directional control valve 15. That is, the directional control valve 15 controls an operation of the hydraulic motor 16.

An operation position signal output from the operation-position signal outputting means 2 and a feedback signal output from the speed detector 4 are input the controller 3. The controller 3 compares the input operation position signal with the input feedback signal, and controls the directional control valve 15 so that the hydraulic motor 16 operates in accordance with the operation position that is input by the operation lever 1. Accordingly, the hydraulic motor 16 operates in accordance with the operation position input by the operation lever 1.

A pressure of the working oil supplied from the hydraulic pump 12 is set at a constant value corresponding to the maximum load pressure independently of a quantity of the working oil used by the hydraulic motor 16, by a combination of a pressure-compensating-function-added servo regulator 13 and a relief valve 14. Accordingly, the hydraulic motor 16 is operable for any arbitrary load pressure.

However, the hydraulic drive apparatus discussed above has the following problem. Even if the load pressure to the hydraulic motor 16 is extremely smaller than the pressure of the working oil supplied from the hydraulic pump 12, the pressure of the working oil supplied from the hydraulic pump 12 is always constant. Therefore, the drive horsepower of the hydraulic pump 12 is wastefully consumed.

Accordingly, an object of the present invention is to drive a hydraulic motor without wastefully consuming the drive horsepower of a hydraulic pump.

A hydraulic drive apparatus in which a plurality of hydraulic motors are driven through a plurality of control valves by one hydraulic pump as disclosed in JP-A-11-36374 has been known for the hydraulic drive apparatus used for general purpose construction machines, such a hydraulic shovel.

An example of the arrangement of the hydraulic drive apparatus will be described with reference to an accompanying drawing.

In a hydraulic drive apparatus 500 shown in Fig. 15, when an operation position is input to an operation lever 610, an electric motor 630 is driven and rotated in accordance with the operation position input to the operation lever 610. The control valve 650 is designed such that when a rotational speed difference is produced between the electric motor 630 and the hydraulic motor 601, the control valve 650 adjusts a quantity of working oil supplied from a hydraulic pump 502 to the hydraulic motor 601 to reduce the speed difference between the electric motor 630 and the hydraulic motor 601 by driving and rotating the hydraulic motor 601. Therefore, when the electric motor 630 is rotated, the hydraulic motor 601 rotates following up the rotation of the electric motor 630, through the action of the control valve 650. A control valve, such as the control valve 650, which drives and rotates the hydraulic motor in accordance with the rotational speed difference between the electric motor and the hydraulic motor, will be referred to as an electro-hydraulic servovalve.

When the operation position is input to an operation lever 710, an operation oil flows through operation oil passages 711 and 712 in accordance with the operation position input to the operation lever 710, and a control valve 750 changes its valve or spool position by the flow of the operation oil. When the control valve 750 moves its position, a quantity of the working oil supplied from the hydraulic pump 502 to a hydraulic motor 701 is controlled, so that the hydraulic motor 701 is driven and rotated. Such a hydraulic motor as the control valve 750, exclusive of the electro-hydraulic servovalve, arranged such that it drives and rotates the hydraulic motor in accordance with the operation position input to the operation lever will be referred to as a general purpose valve.

Generally, the electro-hydraulic servovalve is higher in control accuracy than the general purpose valve.

However, the hydraulic drive apparatus 500 mentioned above suffers from the following problem: When an electro-hydraulic servovalve is used as one of the plurality of control valves in order to improve the control accuracy of a specific rotary shaft, it is difficult to simultaneously drive those hydraulic motors.

For example, in a case of simultaneously driving and rotating the hydraulic motor 601 and the hydraulic motor 701, if a load of the hydraulic motor 701 is smaller than that of the hydraulic motor 601, the working oil supplied from the hydraulic pump 502 flows through the control valve 750 (i.e., the general purpose valve), but does not flow through the control valve 650 (i.e., the electro-hydraulic servovalve). Therefore, the hydraulic motor 701 can be driven and rotated, but the hydraulic motor 601 is not rotated.

Accordingly, a further object of the present invention is to provide a hydraulic drive apparatus which is provided with an electro-hydraulic servovalve and at least one general purpose valve, and is capable of simultaneously operating a plurality of hydraulic motors.

### SUMMARY OF THE INVENTION

The present invention provides a hydraulic drive apparatus according to claim 1.

Further embodiments of the invention are defined in the dependent claims.

The hydraulic drive apparatus according to the invention is capable of setting the pressure of the working oil supplied form the hydraulic pump to be a predetermined pressure higher than a load pressure to the hydraulic motor. Therefore, the hydraulic motor may be driven while being free from the wasteful consumption of the drive horsepower of the hydraulic pump.

According to a further embodiment of the invention the hydraulic drive apparatus is capable of controlling a quantity of the working oil that the working oil supplying means supplies in a quick response manner. Therefore, less flow loss is ensured. Further, the apparatus is capable of remotely controlling a quantity of the working oil that the working oil supplying means supplies.

According to a further embodiment of the invention the hydraulic drive apparatus is capable of accurately detecting a load pressure of the drive rotary member independently of the direction of the load pressure.

According to a further embodiment of the invention the hydraulic drive apparatus may put the main relief valve in an unloading state to such an extend that no cavitation occurs in the working oil supplied to the drive rotary member when the drive rotary member is forcibly driven and rotated by an external load. This feature of the invention eliminates the wasteful consumption of the drive horsepower of the hydraulic pump.

According to a further embodiment of the invention, if the main relief valve is put in an unloading state, the drive rotary member will never operate uncontrollably. Therefore, the drive horsepower of the hydraulic pump is not wastefully consumed.

Where a plurality of hydraulic motors are communicatively coupled in parallel to one hydraulic pump, the drive apparatus may set the pressure of the working oil supplied from the hydraulic pump to be a predetermined pressure higher than the load pressure of the pump which is the highest of the load pressures of those hydraulic pumps. Therefore, the hydraulic motor may be driven and rotated not wastefully consuming the drive horsepower of the hydraulic pump.

When a plurality of operation position inputting means is communicatively coupled in parallel to a single hydraulic pump, the pressure of the working oil supplied from the hydraulic pump may be set to be a predetermined pressure higher than the load pressure of the hydraulic motor which is the highest of the pressures of those hydraulic motors. Therefore, the hydraulic motor may be driven and rotated not wastefully consuming the drive horsepower of the hydraulic pump.

According to a further embodiment of the invention the hydraulic drive apparatus is capable of controlling a quantity of the working oil that the, working oil supplying means supplies in high response manner. This feature leads to reduction of the flow loss. Further, it can control a quantity of the working oil that the working oil supplying means supplies, remotely.

The present disclosure relates to the subject matter contained in Japanese patent application Nos. Hei. 11-246183 (filed on August 31, 1999), 2000-007386 (filed on January 17, 2000) and 2000-004948 (filed on January 13, 2000), which are expressly incorporated herein by reference in their entireties.

### BRIEF DESCRIPTION OF THE DRAWINGS

Fig. 1 is a hydraulic pressure circuit diagram showing a hydraulic drive apparatus which is a first embodiment of the present invention.
Fig. 2 is a hydraulic pressure circuit diagram showing a hydraulic drive apparatus which is a second embodiment of the present invention.
Fig. 3 is a hydraulic pressure circuit diagram showing a hydraulic drive apparatus which is a third embodiment of the present invention.
Fig. 4 is a hydraulic pressure circuit diagram showing a hydraulic drive apparatus which is a fourth embodiment of the present invention.
Fig. 5 is a hydraulic pressure circuit diagram showing a prior art related hydraulic drive apparatus.
Fig. 6 is hydraulic pressure circuit diagram showing a hydraulic drive apparatus which constitutes a fifth embodiment.
Fig. 7 is hydraulic pressure circuit diagram showing a hydraulic drive apparatus which constitutes a sixth embodiment.
Fig. 8 is hydraulic pressure circuit diagram showing a hydraulic drive apparatus which constitutes a seventh embodiment.

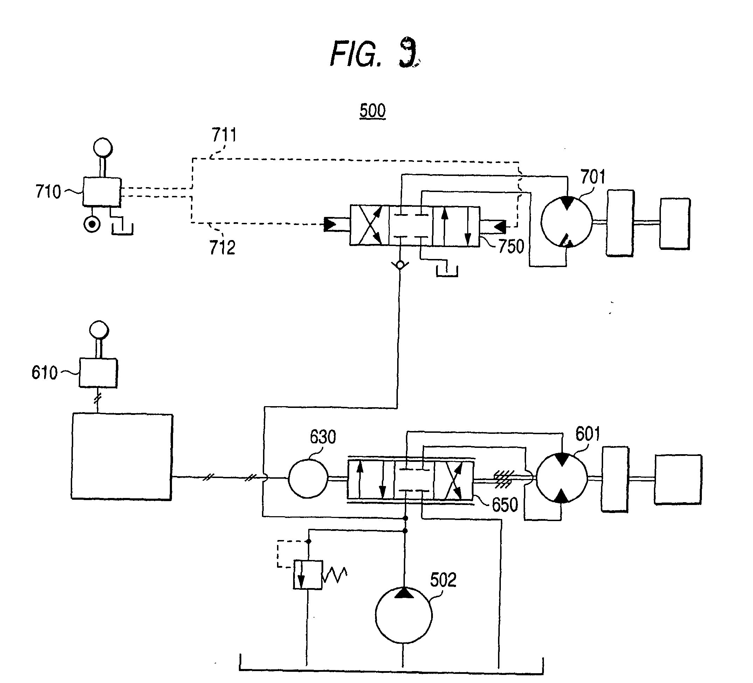

Fig. 9 is hydraulic pressure circuit diagram showing a prior art hydraulic drive apparatus.

### DESCRIPTION OF THE PREFERRED EMBODIMENT

The-preferred embodiments of the present invention will be described with reference to the accompanying drawings.

### <First Embodiment>

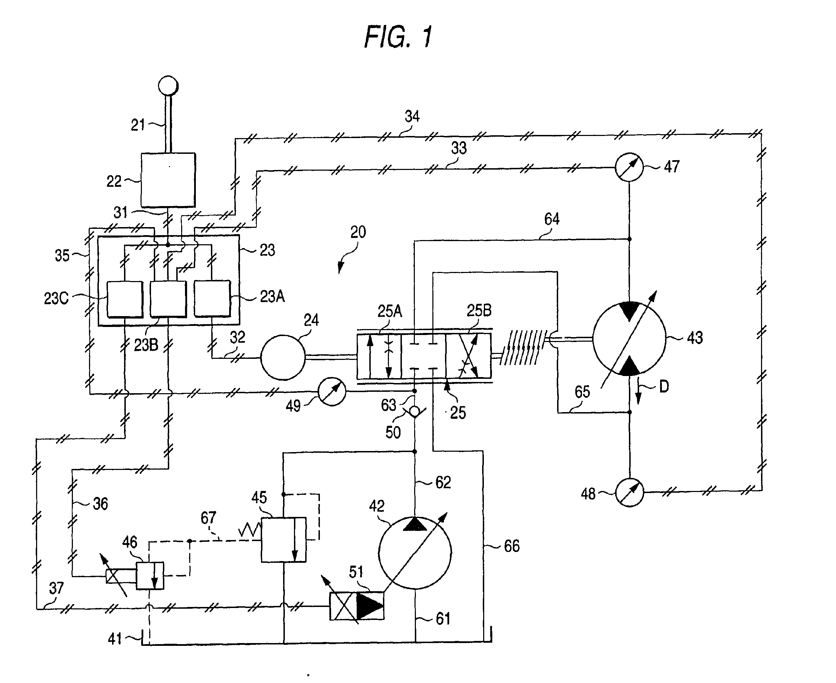

Fig. 1 is a hydraulic pressure circuit diagram showing a hydraulic drive apparatus which constitutes a first embodiment of the present invention.

An arrangement of the hydraulic drive apparatus of the embodiment will first be described.

In Fig. 1, reference numeral 41 designates a tank for storing oil; 43 is a hydraulic motor as a drive rotary member driven and rotated by hydraulic pressure; and 42 is a hydraulic pump as working oil supplying means for driving and rotating the hydraulic motor 43.

Reference numeral 20 designates a rotation control means which controls a quantity of the working oil supplied from the hydraulic pump 42, and supplies the quantity controlled working oil to the hydraulic motor 43, thereby driving the hydraulic motor 43 at a desired rotational speed. The rotation control means 20 is made up of an operation lever 21 as operation position inputting means to which an operation position is input, an operation-position signal outputting means 22 for generating and outputting an operation position signal, which is dependent on the operation position input to the operation lever 21, a drive signal output circuit 23A as drive signal outputting means for computing the operation position signal output from the operation-position signal outputting means 22 into a drive signal, and outputting the drive signal, an electric motor 24 as an electrically driven motor being driven and rotated in accordance with a speed and a quantity of rotation, both being defined by the drive signal output from the drive signal output circuit 23A, and a directional control valve 25 as working oil control means which drives and rotates the hydraulic motor 43 in accordance with a rotation of the electric motor 24 by controlling a quantity of the working oil supplied from the hydraulic pump 42 and supplying the quantity-controlled working oil to the hydraulic motor 43.

The directional control valve 25 and the hydraulic motor 43 are coupled together by screw means in order to vary an opening degree of the valve in accordance with a speed difference between the hydraulic motor 43 and the electric motor 24.

Reference numeral 45 designates an main relief valve which regulates a hydraulic pressure of the working oil, which is supplied from the hydraulic pump 42 to the directional control valve 25, to be a set pressure or lower. Reference numeral 46 designates an electromagnetic relief valve for varying the set pressure of the main relief valve 45 by varying a set pressure thereof.

Reference numerals 47 and 48 are pressure gauges as drive oil pressure detecting means. Each of those pressure gauges detects a pressure of the working oil for driving and rotating the hydraulic motor 43, and generates a drive oil pressure signal depending on the detected pressure. Reference numeral 49 is a pressure gauge as supply oil pressure detecting means, which detects a pressure of the working oil supplied from the hydraulic pump 42 to the directional control valve 25, and generates and outputs a supplying-oil pressure signal depending on the detected pressure.

Reference numeral 50 is a check valve for preventing the reverse flow of the working oil, and reference numeral 51 is a pump regulator as supplying oil quantity control means, which controls a quantity of the working oil supplied by the hydraulic pump 42.

Reference numeral 23B is an oil pressure control circuit as oil pressure control means. The oil pressure control circuit 22B receives a supplying-oil pressure signal output from the pressure gauge 49 and drive oil pressure signals output from the pressure gauges 47 and 48. The oil pressure control circuit 22B feeds current to the electromagnetic relief valve 46 to vary a set pressure of the electromagnetic relief valve 46 to thereby vary a set pressure of the main relief valve 45. Consequently, the oil pressure control circuit 22B executes such a control that the pressure of the working oil supplied from the hydraulic pump 42 is higher, by a predetermined pressure, than the pressure of the working oil for driving and rotating the hydraulic motor 43. Reference numeral 23C is a supplying oil quantity signal output circuit as supplying oil quantity signal outputting means which computes an operation position signal output from the operation-position signal outputting means 22 into a supplying oil quantity signal and outputs it. Incidentally, the drive signal output circuit 23A, the oil pressure control circuit 23B and the supplying oil quantity signal output circuit 23C are accommodated in a housing 23.

Reference numerals 31 to 37 designate signal transmission paths; reference numerals 61 to 66 are oil passages; and numeral 67 is a pilot oil passage.

An operation of the thus constructed hydraulic drive apparatus of the embodiment will be described.

Description will be given about an operation of the hydraulic drive apparatus to drive and rotate the hydraulic motor 43 in accordance with an operation position input by the operation lever 21.

An operator changes an angle of the operation lever 21 to input an operation position to the hydraulic drive apparatus. Then, the operation-position signal outputting means 22 outputs an operation position signal as an electric signal, which is dependent on the operation position input to the operation lever 21. Subsequently, the operation position signal output from the operation-position signal outputting means 22 is input to the drive signal output circuit 23A by way of the signal transmission path 31. Upon receipt of the signal, the drive signal output circuit 23A computes the operation position signal received from the operation-position signal outputting means 22, and outputs a drive signal to the electric motor 24. The drive signal output from the drive signal output circuit 23A is then input to the electric motor 24 via the signal transmission path 32. As a result, the electric motor 24 is driven and rotated at a speed and a quantity of rotation, which are defined by the drive signal received from the drive signal output circuit 23A.

The electric motor 24, directional control valve 25 and hydraulic motor 43 make up an electro-hydraulic servomechanism, not shown. Therefore, the hydraulic motor 43 is rotated following up the rotation of the electric motor 24.

Description will be given about an operation of the electro-hydraulic servomechanism, which is made up of the electric motor 24, directional control valve 25 and hydraulic motor 43.

When an angle difference θ₃ is produced between an input angle θ₁ of the electric motor 24 and an output angle θ₂ of the hydraulic motor 43, a mechanical mechanism (not shown) opens a port of the directional control valve 25 in accordance with the angle difference θ₃. When the port of the directional control valve 25 is opened, the working oil is supplied from the hydraulic pump 42 to the hydraulic motor 43 and the hydraulic motor 43 is driven and rotated since the working oil for driving and rotating the hydraulic motor 43 has been fed from the tank 41 to the directional control valve 25 through the oil passages 61 to 63 by the hydraulic pump 42. When the hydraulic motor 43 is driven and rotated, the mechanical mechanism (not shown) reduces the angle difference θ₃. When the input angle θ₁ is larger than the output angle θ₂, the output angle θ₂ is increased through the rotation of the hydraulic motor 43 till the angle difference θ₃ is reduced to zero. When the input angle θ₂ is larger than the output angle θ₁, the output angle θ₁ is reduced through the rotation of the hydraulic motor 43 till it is reduced to zero. Accordingly, so long as the angle difference θ₃ is present, the hydraulic motor 43 is driven and rotated by the servomechanism, while following up the rotation of the electric motor 24.

As described above, the electric motor 24 is driven and rotated in accordance with the operation position that is input by operating the operation lever 21 by the operator, and the hydraulic motor 43 is driven and rotated following up the rotation of the electric motor 24. Accordingly, the hydraulic motor 43 is driven and rotated in accordance with the operation position that is input through the operation lever 21 by the operator.

An operation of a featured portion of the present invention will be described.

The working oil for driving and rotating the hydraulic motor 43 by the hydraulic pump 42 is supplied from the tank 41 to the directional control valve 25 through the oil passages 61 to 63. The working oil that is supplied to the directional control valve 25 is supplied through an oil passage 64 to the hydraulic motor 43 by the directional control valve 25, and thereafter it is returned to the directional control valve 25 via an oil passage 65, or it is supplied through the oil passage 65 to the hydraulic motor 43, and then it is returned to the directional control valve 25 via the oil passage 64, or it is not supplied to the hydraulic motor 43 since its passage connected to the hydraulic motor 43 is interrupted. When the working oil is supplied to the hydraulic motor 43 and then returned to the directional control valve 25, the working oil is returned to the tank 41 via an oil passage 66 to the tank 41.

A pressure of the working oil supplied from the hydraulic pump 42 to the directional control valve 25 is controlled to be higher than the pressure of the working oil for driving and rotating the hydraulic motor 43 by a maximum pressure of 20kg/cm².

A control of the pressure of the working oil supplied from the hydraulic pump 42 to the directional control valve 25 will now be described.

The inputting and outputting of the oil pressure control circuit 22B which dominantly function in the control will be described.

The drive oil pressure signals output from the pressure gauges 47 and 48 are input through signal transmission paths 33 and 34 to the oil pressure control circuit 23B. Further, a supplying-oil pressure signal output from the pressure gauge 49 is input to the oil pressure control circuit 23B through a signal transmission path 35. The drive oil pressure signals are respectively generated by the pressure gauges 47 and 48 depending on pressures of the working oils in the oil passages 64 and 65 which are detected by the pressure gauges 47 and 48. The supplying-oil pressure signal is generated by the pressure gauges 49 depending on a pressure of the working oil in an oil passage 63, which is detected by the pressure gauge 49.

The oil pressure control circuit 23B feeds current to the electromagnetic relief valve 46 through a signal transmission path 36.

The oil pressure control circuit 23B varies a pressure of the working oil supplied from the hydraulic pump 42 to the directional control valve 25 in the following way by varying the current output therefrom.

When the oil pressure control circuit 23B varies the current that is output through the signal transmission path 36 to the electromagnetic relief valve 46, a set pressure of the electromagnetic relief valve 46 varies since the set pressure of the electromagnetic relief valve 46 is determined by the current input thereto. Since the pressure of the pilot oil in the pilot oil passage 67 is equal to the set pressure in the electromagnetic relief valve 46, the pressure of the pilot oil also varies with variation of the set pressure of the electromagnetic relief valve 46. The set pressure of the main relief valve 45 is determined by the pressure of the pilot oil. Therefore, when the pressure of the pilot oil varies, the set pressure of the main relief valve 45 also varies. Further, the main relief valve 45 controls the pressure of the working oil that is supplied from the hydraulic pump 42 to the directional control valve 25 to be the set pressure or lower. When the set pressure of the main relief valve 45 varies, the pressure of the working oil supplied from the hydraulic pump 42 to the directional control valve 25 also varies.

As described above, the oil pressure control circuit 23B is able to vary the pressure of the working oil supplied from the hydraulic pump 42 to the directional control valve 25 by varying the current fed to the electromagnetic relief valve 46.

Then, the control for the working oil that is supplied from the hydraulic pump 42 to the directional control valve 25 will be described while tracing its control phases.

The pressures of the working oils flowing through the oil passages 64 and 65 are detected by the pressure gauges 47 and 48, respectively; the drive oil pressure signals representative of those detected pressures are generated; and those signals are output to the oil pressure control circuit 23B through the signal transmission paths 33 and 34. The pressure of the working oil in the oil passage 63 is detected by the pressure gauge 49; a supplying-oil pressure signal representative of the detected pressure is generated; and the signal is output to the oil pressure control circuit 23B through the signal transmission path 35.

The oil pressure control circuit 23B receives a supplying-oil pressure signal from the pressure gauge 49, and drive oil pressure signals from the pressure gauges 47 and 48. Then, by using a higher one of the drive oil pressure signals (i.e. the drive signal output from the pressure gauge 47 or 48 which detects a pressure higher than that detected by the other pressure gauge 47 or 48) and the supplying-oil pressure signal of the pressure gauge 49, the oil pressure control circuit 23B determines the current to be fed to the electromagnetic relief valve 46 so that the pressure of the working oil received from the hydraulic pump 42 is higher than the pressure of the working oil for driving and rotating the hydraulic motor 43 by 20kg/cm² at maximum. Then, the oil pressure control circuit feeds the current to the electromagnetic relief valve 46 through the signal transmission path 36. By using this current, as described above, the oil pressure control circuit 23B varies the pressure of the working oil supplied from the hydraulic pump 42 to the directional control valve 25.

The reason why the drive oil pressure signal indicative of a higher pressure is selected from the drive oil pressure signals output from the pressure gauges 47 and 48 when the oil pressure control circuit 23B determines the current to be fed to the electromagnetic relief valve 46 is that a higher one of the hydraulic pressures detected by the pressure gauges 47 and 48 is the pressure of the working oil for driving and rotating the hydraulic motor 43.

By repeating the above-mentioned process constantly, the pressure of the working oil supplied from the hydraulic pump 42 is controlled to be higher, by a maximum pressure of 20kg/cm² , than the pressure of the working oil for driving and rotating the hydraulic motor 43.

The current that the oil pressure control circuit 23B feeds to the electromagnetic relief valve 46 via the signal transmission path 36 when the higher one of the hydraulic pressures detected by the pressure gauges 47 and 48 is equal to or.higher than a predetermined pressure, is set to be OA (zero A). This current setting causes the electromagnetic relief valve 46 to open, that is, the main relief valve 45 is opened due to the opening of the electromagnetic relief valve 46 to establish an unload state, so that the working oil flows from the main relief valve 45 to the tank 41, and the hydraulic pump 42 receives no load. Accordingly, when the hydraulic drive apparatus is used for the winch, and the hydraulic motor 43 is forcibly driven and rotated by an external load as in the case of winding-down of the winch, the main relief valve 45 may be placed to an unloading state to such an extent that no cavitation occurs in the working oil supplied to the hydraulic motor 43. As a result, there is eliminated the wasteful consumption of the drive horsepower of the hydraulic pump 42.

Since the required unloading state level is merely to such an extent that no cavitation occurs in the working oil supplied to the hydraulic motor 43, the current that the oil pressure control circuit 23B feeds to the electromagnetic relief valve 46 via the signal transmission path 36 may be set to be a predetermined current other than the current OA.

In the hydraulic drive apparatus of the embodiment, the electro-hydraulic servomechanism carries out such a control that when the electric motor 24 stops, the hydraulic motor 43 also stops. Accordingly, when the electric motor 24 stands still and the hydraulic motor 43 receives an external load to rotate, the port of the directional control valve 25 is opened and closed to drive and rotate the hydraulic motor 43 to resist the load applied. If the check valve 50 is not provided at the position shown in Fig. 1, the hydraulic motor 43 will run uncontrollably when the hydraulic motor 43 is placed to an unloading state since in this case, the working oil flows in the reverse direction, viz., the working oil flows from the directional control valve 25 through the oil passage 63 to the hydraulic pump 42. If the set pressure of the main relief valve 45 is set to be larger than the load pressure in order to prevent the reverse flow, the drive horsepower of the hydraulic pump 42 is wastefully consumed. In this connection, if the check valve 50 is provided at the position shown in Fig. 1 as in the embodiment, the main relief valve 45 can be put in an unloaded state without any reverse flow of the working oil, and therefore it is possible to eliminat the wasteful consumption of the drive horsepower of the hydraulic pump 42.

Examples where the hydraulic motor 43 receives an external load while the electric motor 24 stops are: when the hydraulic drive apparatus is applied to the driving machine of a service car, it stops on a sloping road; when the hydraulic drive apparatus is applied to a rotary machine of the service car, the rotating operation stops on a sloping surface; and when the hydraulic drive apparatus is applied to the winch, the winch is stopped.

In hydraulic drive apparatus of the embodiment, a quantity of the working oil that the hydraulic pump 42 supplies is controlled to be 5% larger than the necessary quantity of the working oil for the hydraulic motor 43. Therefore, the flow loss of the hydraulic pump 42 is small.

The control of the quantity of the working oil that the hydraulic pump 42 supplies will be described hereunder.

A quantity of the working oil necessary for driving the hydraulic motor 43 (this quantity will be referred to merely as a necessary quantity) can be obtained from the rotational speed (rotational number) and stroke volume of the hydraulic motor 43.

The hydraulic motor 43 follows up the electric motor 24 in rotation. Therefore, the rotational speed of the hydraulic motor 43 is equal to the rotational speed of the electric motor 24. In the embodiment, the stroke volume of the hydraulic motor 43 takes a design value. The rotational speed of the electric motor 24 is determined by an operation position signal output from the operation-position signal outputting means 22.

Accordingly, the supplying oil quantity signal output circuit 23C computes a necessary quantity of the hydraulic motor 43 by using an operation-position signal output from the operation-position signal outputting means 22 and a known stroke volume of the hydraulic motor 43; generates a supplying oil quantity signal so that the quantity of the working oil supplied from the hydraulic pump 42 is 5% larger than the computed necessary quantity of the hydraulic motor 43; and transmits the generated signal to the pump regulator 51 through a signal transmission path 37. Upon receipt of the supplying oil quantity signal, the pump regulator 51 controls the quantity of the working oil supplied by the hydraulic pump 42 by operating a pump capacity (cc/rev) in accordance with the supplying oil quantity signal.

In this way, the quantity of the working oil that the hydraulic pump 42 supplies is controlled to be 5% higher than the necessary quantity of the hydraulic motor 43.

In the embodiment, the quantity of the working oil that the hydraulic pump 42 supplies is controlled to be 5% higher than the necessary quantity of the hydraulic motor 43. It is evident that the quantity of the working oil that the hydraulic pump 42 supplies may be controlled to be higher than the necessary quantity of the hydraulic motor 43 by a percentage value other than 5%. The quantity of the working oil that the hydraulic pump 42 supplies may be controlled remotely by use of the pump regulator 51 and the supplying oil quantity signal output circuit 23C.

The pump regulator 51 is not limited to the regulator of the type illustrated in Fig. 1, but may be of the hydraulic pilot type, the electromagnetic proportional type, the electrically driven type, or the like.

In the hydraulic drive apparatus of the embodiment, the drive signal output circuit 23A, the oil pressure control circuit 23B and the supplying oil quantity signal output circuit 23C are all contained in the housing 23. Since the housing 23 is used, there is no chance that the hydraulic drive apparatus is made complicated as a whole. Further, the electrical components including the drive signal output circuit 23A, oil pressure control circuit 23B and supplying oil quantity signal output circuit 23C are gathered into the housing. This makes it easy to repair.

In the present embodiment, the pressure of the working oil supplied from the hydraulic pump 42 is controlled to be higher than the pressure of the working oil for driving and rotating the hydraulic motor 43 by a maximum pressure of 20kg/cm². It is evident that the pressure difference is not limited to 20kg/cm² but may be any of other suitable values than it.

In the electro-hydraulic servomechanism mentioned above, if the directional control valve 25 is not provided with a throttle, the hydraulic motor 43 follows up the electric motor 24 in rotation in a quick responsive manner, but it is easy to vibrate. In the hydraulic drive apparatus of the embodiment, the directional control valve 25 includes a large throttle. Therefore, the hydraulic motor 43 smoothly follows up the electric motor 24 in rotation, although its responsive time may be long. In the hydraulic drive apparatus of the embodiment, the throttle of the directional control valve 25 is arranged in the meter-out of the 25A side and in the meter-in of the 25B side. Accordingly, the hydraulic drive apparatus of the embodiment is used in a case where the hydraulic motor 43 constantly receives an external load only in the winding-down direction (indicated by an arrow D in Fig. 1), as in the winch.

### <Second Embodiment>

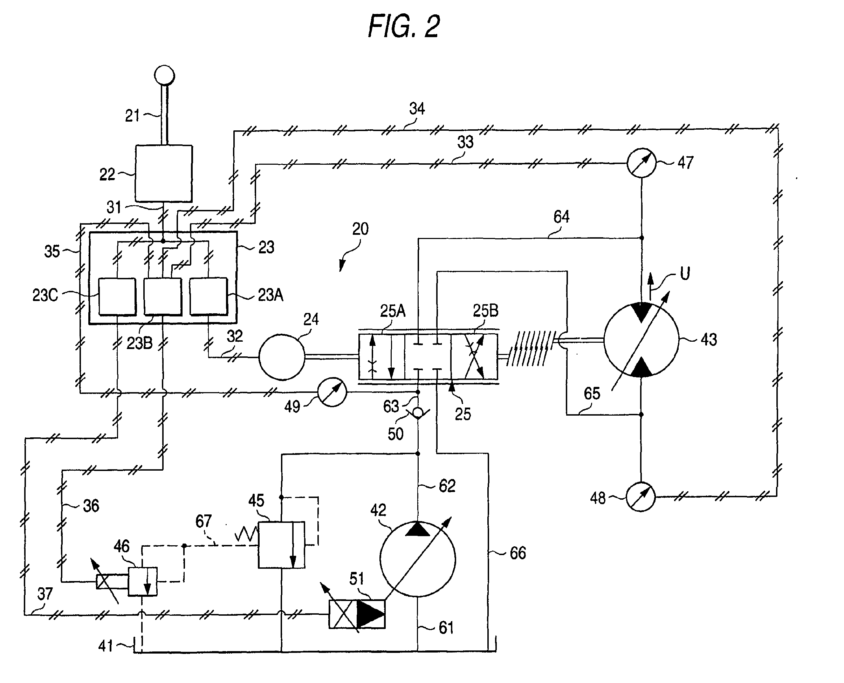

Fig. 2 is a hydraulic pressure circuit diagram showing a hydraulic drive apparatus which is a second embodiment of the present invention.

A basic construction of the hydraulic drive apparatus of the second embodiment is substantially the same as of the first embodiment except that the throttle of the directional control valve 25 is arranged in the meter-in of the 25A side and in the meter-out of the 25B side. The hydraulic drive apparatus is used in a case where the hydraulic motor 43 constantly receives an external load only in the direction of an arrow U in Fig. 2.

### <Third Embodiment>

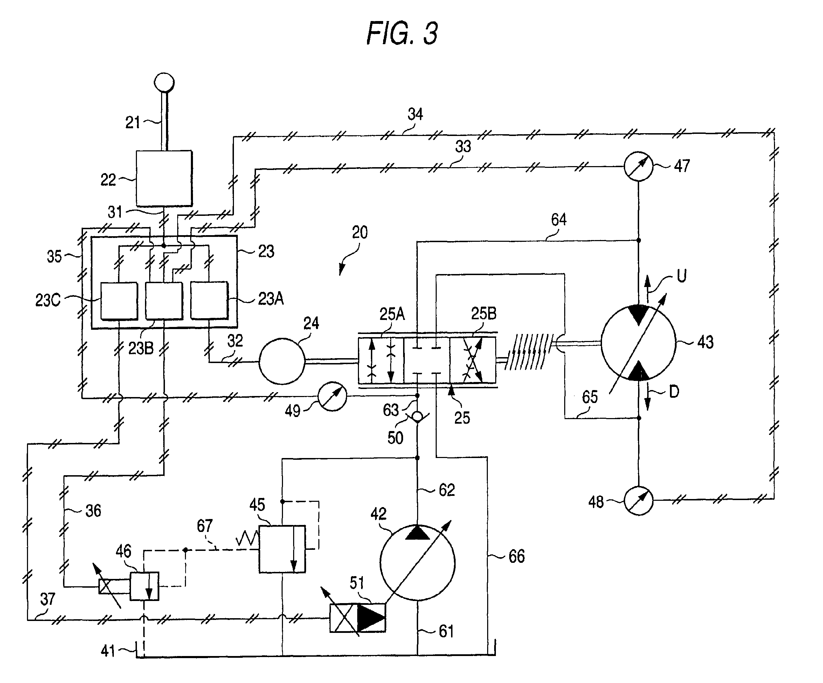

Fig. 3 is a hydraulic pressure circuit diagram showing a hydraulic drive apparatus which is a third embodiment of the invention.

A basic construction of the hydraulic drive apparatus of the third embodiment is substantially the same as of each of the first and second embodiments except that the throttle of the directional control valve 25 is arranged in the meter-in and meter-out of the 25A side and in the meter-in and meter-out of the 25B side. The hydraulic drive apparatus is used in a case where the hydraulic motor 43 receives external loads in directions of arrows U and D in Fig. 3.

### <Fourth Embodiment>

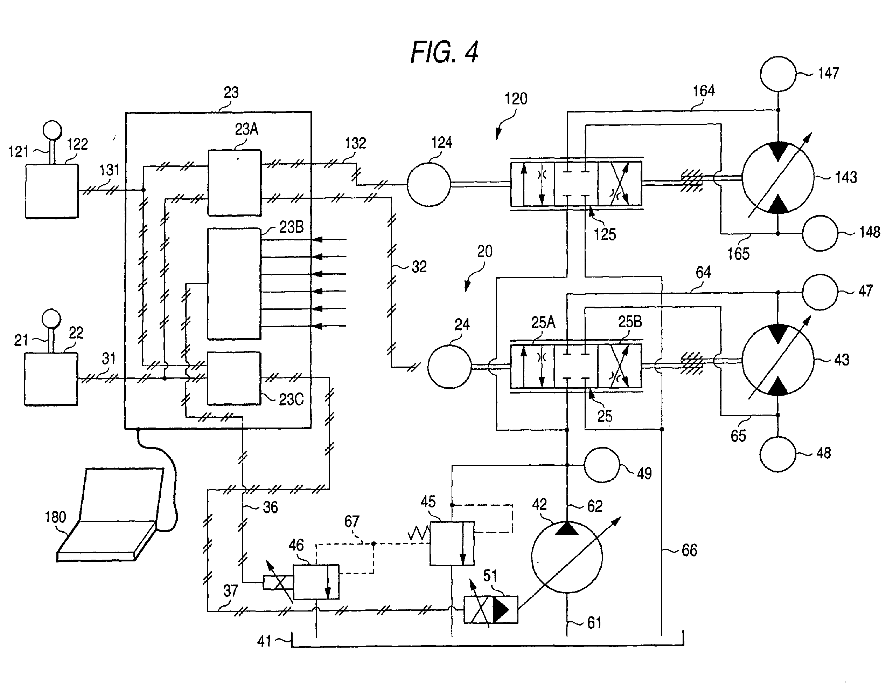

Fig. 4 is a hydraulic pressure circuit diagram showing a hydraulic drive apparatus which is a fourth embodiment of the present invention.

An arrangement of the hydraulic drive apparatus of the embodiment will be described.

The arrangement of the hydraulic drive apparatus of this embodiment is substantially the same as of each of the first to third embodiments except the arrangement to be described hereunder.

Reference numeral 143 indicates a hydraulic motor as an additional drive rotary member to be driven and rotated by hydraulic pressure.

Reference numeral 120 designates a rotation control means which controls a quantity of the working oil supplied from the hydraulic pump 42 to the hydraulic motor 143, thereby driving and rotating the hydraulic motor 143 as desired. The additional rotation control means 120 is made up of an operation lever 121, an additional operation-position signal outputting means 122, a drive signal output circuit 23A, an electric motor 124, and a directional control valve 125. The operation lever 121 serves as additional operation position inputting means and is able to input a desired operation position. The additional operation-position signal outputting means 122 generates an operation position signal in accordance with an operation position input to the operation lever 121. The drive signal output circuit 23A serves as additional drive signal outputting means and computes and converts an operation position signal output from the additional operation-position signal outputting means 122 into a drive signal. The electric motor 24 serves as an additional electric motor and is driven and rotated at a speed and a quantity of rotation, both being defined by the drive signal output from the drive signal output circuit 23A. The directional control valve 125 serves as additional working oil control means, and controls a quantity of the working oil supplied from the hydraulic pump 42, and supplies the thus quantity-controlled working oil to the hydraulic motor 143, thereby driving and rotating the hydraulic motor 143 in accordance with rotation of the electric motor 124.

The drive signal output circuit 23A also serves as drive signal outputting means as in the hydraulic drive apparatus of each of the first to third embodiments.

Reference numerals 147 and 148 represent pressure gauges as additional drive oil pressure detecting means. Each of those pressure gauges detects a pressure of the working oil for driving and rotating the hydraulic motor 143, and generates and outputs a drive oil pressure signal depending on the pressure thus detected.

In the embodiment, an oil pressure control circuit 23B as oil pressure control means receives a supplying-oil pressure signal output from the pressure gauge 49, drive oil pressure signals output from the pressure gauges 47 and 48, and drive oil pressure signals output from the pressure gauges 147 and 148. The oil pressure control circuit 23B feeds current to the electromagnetic relief valve 46, and varies a set pressure of the main relief valve 45 by varying a set pressure of the electromagnetic relief valve 46 whereby it carries out such a control that a pressure of the working oil supplied from the hydraulic pump 42 is set to be higher, by a predetermined pressure, than a pressure of the working oil for driving and rotating the hydraulic motor 43.

The supplying oil quantity signal output circuit 23C as supplying oil quantity signal outputting means receives an operation position signal output from the operation-position signal outputting means 22, and an operation position signal output from the additional operation-position signal outputting means 122, and computes those signals into a supplying oil quantity signal, and outputs the resultant signal.

Reference numerals 131 and 132 stand for signal transmission paths for transmitting signals, and numerals 164 and 165 represent oil passages for transmitting working oil.

The pressure sensors 47 to 49, and 147 and 148 are electrically connected to the oil pressure control circuit 23B through signal transmission paths not shown.

A computer 180 is electrically connected to the drive signal output circuit 23A, oil pressure control circuit 23B, and supplying oil quantity signal output circuit 23C through signal transmission paths not shown.

An operation of the hydraulic drive apparatus of this embodiment will be described.

The operation of this hydraulic drive apparatus is substantially the same as that of each of the hydraulic drive apparatuses of the first to third embodiments.

The additional rotation control means 120 is capable of rotating the hydraulic motor 143 as desired similarly to the rotation control means 20 which drives and rotates the hydraulic motor 43 as desired.

The hydraulic drive apparatus of this embodiment controls the quantity of the working oil supplied from the hydraulic pump 42 so that it is larger than the sum of the necessary quantities of the hydraulic motors 43 and 143 by 5%, in the similar manner as the hydraulic drive apparatus of each of the first to third embodiments does. Therefore, the flow loss of the hydraulic pump 42 is small.

The hydraulic drive apparatus of this embodiment controls the pressure of the working oil supplied from the hydraulic pump 42 so that it is higher, by a maximum pressure of 20kg/cm², than a higher one of the pressures of the working oils for driving the hydraulic motors 43 and 143, in the similar manner as the hydraulic drive apparatus of each of the first to third embodiments does. Therefore, there is eliminated the wasteful consumption of the drive horsepower of the hydraulic pump 42.

In the hydraulic drive apparatus of this embodiment, the computer 180 has various functions. Examples of the functions are: it outputs a signal to the drive signal output circuit 23A by way of a signal transmission path (not shown) to set rotational speeds of the electric motors 24 and 124; it outputs a signal to the oil pressure control circuit 23B by way of a signal transmission path (not shown) to set a set pressure of the electromagnetic relief valve 46; and it outputs a signal to the supplying oil quantity signal output circuit 23C via a signal transmission path to set a quantity of working oil discharged from the hydraulic pump 42.

In this embodiment, the hydraulic motor 43 is driven and rotated in response to the operation position signal input from the operation lever 21, and the hydraulic motor 143 is driven and rotated in response to the operation position input from the operation lever 121. Alternatively, those hydraulic motors 43 and 143 may be driven and rotated in response to an operation position input from one operation lever.

While in this embodiment, the hydraulic drive apparatus includes two electro-hydraulic servovalves, it may include three or more number of electro-hydraulic servovalves.

### <5th Embodiment>

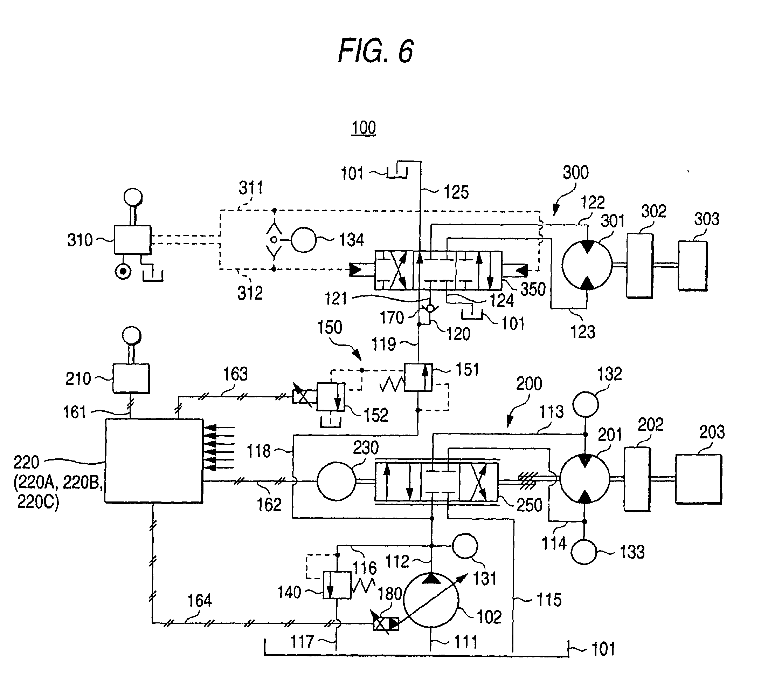

Fig. 6 is a hydraulic pressure circuit diagram showing a hydraulic drive apparatus 100, which is a fifth embodiment of the present invention.

An arrangement of the hydraulic drive apparatus 100 of the embodiment will be described.

In Fig. 6, the hydraulic drive apparatus 100 includes a hydraulic pump 102 for supplying working oil from a tank 101 through an oil passage 111 to an oil passage 112.

The hydraulic drive apparatus 100 includes a first hydraulic motor 201 and a second hydraulic motor 301. The first hydraulic motor 201 receives working oil from the hydraulic pump 102 through one of oil passages 113 and 114 and the oil passage 112, and is driven and rotated by the supplied working oil. The second hydraulic motor 301 receives working oil from the hydraulic pump 102 through the oil passages 112, 118, 119 and 120 and an oil passage 122 or 123, and is driven and rotated by the supplied working oil.

The hydraulic drive apparatus 100 further includes a first operation unit 200 which is made up of a first operation lever 210 as first operation position input means which receives an operation position, and generates and outputs an operation position signal indicative of the input operation position, a drive signal output circuit 220A as drive signal outputting means which receives the operation position signal from the first operation lever 210 by way of a signal transmission path 16, computes the operation position signal into a drive signal, and outputs the drive signal, an electric motor 230 which receives a drive signal through a signal transmission path 162 from the drive signal output circuit 220A, and is driven and rotated at a rotational speed defined by the drive signal received, and a first control valve 250 which allows the working oil supplied from the hydraulic pump 102 to the first hydraulic motor 201 to flow therethrough, adjusts a quantity of the working oil flowing therethrough in accordance with the rotational speeds of the electric motor 230 and the first hydraulic motor 201, and thereby adjusts a quantity of the working oil supplied from the hydraulic pump 102 to the first hydraulic motor 201, whereby the first hydraulic motor 201 is driven and rotated in accordance with the operation position input to the first operation lever 210.

In the hydraulic drive apparatus, a drive rotation of the first hydraulic motor 201 is reduced in speed by a speed reduction mechanism 202 and thereafter is transmitted to a load 203. As described above, the first control valve 250 is constructed such that it allows the working oil supplied from the hydraulic pump 102 to the first hydraulic motor 201 to flow therethrough, adjusts a quantity of the working oil flowing therethrough in accordance with the rotational speeds of the electric motor 230 and the first hydraulic motor 201, and thereby adjusts a quantity of the working oil supplied from the hydraulic pump 102 to the first hydraulic motor 201. To be more specific, the first control valve 250 is coupled to the rotary shaft of the electric motor 230 and to the rotary shaft of the first hydraulic motor 201 by means of screws. When a rotational speed difference is produced between the electric motor 230 and the first hydraulic motor 201, the first control valve adjusts a quantity of the working oil flowing therethrough, viz., a quantity of the working oil supplied from the hydraulic pump 102 to the first hydraulic motor 201, so that the rotational speed of the electric motor 230 is equal to that of the first hydraulic motor 201. In this state, the first hydraulic motor 201 is driven and rotated. The working oil having rotated the first hydraulic motor 201 passes through the other of the oil passages 113 and 114. And it passes through the first control valve 250 again and further through an oil passage 115, and returns to the tank 101.

The first control valve 250 constitutes an electro-hydraulic servovalve.

The hydraulic drive apparatus 100 includes a second operation unit 300, which is made up of a second operation lever 310 as second operation position inputting means to which an operation position is input, and a second control valve 350 which allows the working oil supplied from the hydraulic pump 102 to the second hydraulic motor 301 to flow therethrough, adjusts a quantity of the working oil flowing therethrough in accordance with an operation position input to the second operation lever 310, whereby the second hydraulic motor 301 is driven and rotated in accordance with an operation position input to the second operation lever 310.

The oil passages 120 and 121 intercommunicate with each other through a check valve 170. A drive rotation of the second hydraulic motor 301 is reduced in speed by a speed reduction mechanism 302, and transmitted to a load 303. The working oil having rotated the second hydraulic motor 301 passes through the other of the oil passages 122 and 123, and again through the second control valve 350. Further, it passes through an oil passage 124 and returns to the tank 101. Of the working oil flowing through the oil passage 119, working oil other than the working oil supplied to the second hydraulic motor 301 is supplied again to the tank 101 via the second control valve 350 and an oil passage 125.

The second control valve 350 constitutes a general purpose valve.

The hydraulic drive apparatus 100 includes a pressure sensor 131 as supplying oil detect means which detects a pressure of the working oil supplied from the hydraulic pump 102 to the first control valve 250, and generates a supplying-oil pressure signal dependent on the pressure, and pressure sensors 132 and 133 as drive oil pressure detecting means which detects a pressure of the working oil for driving and rotates the first hydraulic motor 201 and generates and outputs a drive oil pressure signal that is dependent on the pressure. The pressure sensors 131, 132 and 133 are arranged so as to detect pressures of the working oil flowing through the oil passages 112, 113 and 114.

The hydraulic drive apparatus 100 also includes a pressure control valve 140 as first working oil adjusting means, a pressure control valve 150 as second working oil pressure adjusting means and a pressure adjust signal output circuit 220B as pressure adjust signal outputting means. The pressure control valve 140 receives working oil from the hydraulic pump 102 via the oil passages 112 and 116, allows the supplied working oil to flow therethrough, and adjusts a pressure of the working oil supplied from the hydraulic pump 102 to the first control valve 250 to be below a set pressure. The pressure control valve 150 allows the working oil supplied from the hydraulic pump 102 to the second control valve 350 to flow therethrough, and adjusts a pressure of the working oil supplied from the hydraulic pump 102 to the first control valve 250 to be below a set pressure. The pressure adjust signal output circuit 220B receives an operation position signal from the first operation lever 210 via the signal transmission path 161, a supplying-oil pressure signal from the pressure sensor 31 via a signal transmission path, and a drive oil pressure signal from each of the pressure sensors 132 and 133 via signal transmission paths (not shown). The pressure adjust signal output circuit 220B judges, by the input operation position signal, whether the first hydraulic motor 201 drives and rotates the first hydraulic motor 201 or stops the rotation of the first hydraulic motor 201. When the first operation unit 200 drives and rotates the first hydraulic motor 201, the pressure adjust signal output circuit computes a pressure of the working oil necessary for driving and rotating the first hydraulic motor 201 by use of the input supplying-oil pressure signal and the drive oil pressure signal. The pressure adjust signal output circuit generates a pressure adjust signal which causes the pressure control valve 150 to adjust a set pressure of the pressure control valve 150 so that the set pressure is higher, by a predetermined pressure, than a pressure of the working oil necessary for driving and rotating the first hydraulic motor 201. In the embodiment, the predetermined pressure is 20 Kg/cm². When the first operation unit 200 stops the rotation of the first hydraulic motor 201, the pressure adjust signal output circuit generates a pressure adjust signal which causes the pressure control valve 150 to adjust a set pressure thereof to such a pressure (0 Kg/cm² in the embodiment) at which the pressure control valve 150 allows the working oil to freely flow. Then, the pressure adjust signal output circuit outputs the generated pressure adjust signal through a signal transmission path 163 to the pressure control valve 150.

The working oil having passed through the pressure control valve 140 is returned to the tank 101, through an oil passage 117.

The pressure control valve 150 includes a main relief valve 151 and an electromagnetic relief valve 152. The main relief valve 151 adjusts a pressure of the working oil supplied from the hydraulic pump 102 to the first control valve 250 to a set pressure or smaller, by flowing the working oil supplied from the hydraulic pump 102. The electromagnetic relief valve 152 adjusts a set pressure of the main relief valve 151 by adjusting a set pressure thereof in accordance with a pressure adjust signal as input thereto through the signal transmission path 163.

As shown in Fig. 6, the first control valve 250, pressure control valve 140 and pressure control valve 150 are arranged so that the pressures of the working oil supplied thereto are equal to one another.

The hydraulic drive apparatus 100 includes a pump regulator 180, a pressure sensor 134, and a supplying-oil adjust signal output circuit 220C. The pump regulator 180 as supplying oil quantity adjusting means adjusts a quantity of the working oil that the hydraulic pump 102 supplies. The pressure sensor 34 as operation position detecting means detects an operation position input to the second operation lever 310, and generates and outputs an operation position detect signal defined by the operation position. The supplying-oil adjust signal output circuit 220C as supplying oil quantity adjusting signal outputting means receives an operation position signal from the first operation lever 210 by way of the signal transmission path 161, and an operation position detect signal from the pressure sensor 134 by way of a signal transmission path (not shown) . The supplying-oil adjust signal output circuit judges, by the input operation position detect signal, whether the second operation unit 300 drives and rotates the second hydraulic motor 301 or stops the rotation of the second hydraulic motor 301. When the second operation unit 300 drives and rotates the second hydraulic motor 301, the supplying-oil adjust signal output circuit generates a supplying-oil adjust signal which causes the pump regulator 180 to adjust a quantity of the working oil that the hydraulic pump 102 supplies to a predetermined quantity, e.g., a maximum oil quantify of the hydraulic pump 102 in the embodiment. When the second operation unit 300 stops the rotation of the second hydraulic motor 301, the supplying-oil adjust signal output circuit computes a quantity of the working oil necessary for driving and rotating the first hydraulic motor 201 in accordance with an operation position signal input thereto through the signal transmission path 161. The supplying-oil adjust signal output circuit generates a supplying-oil adjust signal which causes the pump regulator 180 to adjust a quantity of the working oil that the hydraulic pump 102 supplies to be larger than that of the working oil necessary for driving and rotating the first hydraulic motor 201 by a predetermined quantity (5% in the embodiment). Then, the supplying-oil adjust signal output circuit outputs the generated oil quantity adjust signal through the signal transmission path 164 to the pump regulator 180.

The drive signal output circuit 220A, pressure adjust signal output circuit 220B or supplying-oil adjust signal output circuit 220C are accommodated in a control unit 220.

As described above, the second control valve 350 is arranged so as to adjust a quantity of the working oil flowing therethrough in accordance with an operation position input to the second operation lever 310. More specifically, the second operation lever 310 is arranged to supply a quantity of the working oil, which is dependent on an operation position as input thereto. The second control valve 350 receives operation oil from the second operation lever 310 via the operation oil passage 311 or 312, and adjusts a quantity of the working oil flowing therethrough in accordance with the quantity of the operation oil supplied.

As described above, the pressure sensor 134 detects an operation position input to the second operation lever 310. To be more specific, the pressure sensor 134 detects a pressure of the operation oil supplied from the second operation lever 310 to the second control valve 350 by detecting an oil pressure which is the higher of the pressures of the operation oils supplied to the operation oil passages 311 and 312. The pressure sensor 134 further detects an operation position input to the second operation lever 310, which is proportional to a pressure of the operation oil supplied from second operation lever 310 to the second control valve 350 by detecting a pressure of the operation oil supplied from the second operation lever 310 to the second control valve 350.

An operation of the hydraulic drive apparatus 100 thus constructed will be described.

A case (referred to as a first case) where the first operation unit 200 drives and rotates the first hydraulic motor 201 and the second operation unit 300 stops the rotation of the second hydraulic motor 301 will first be described.

The hydraulic pump 102 feeds working oil from the tank 101 to the oil passage 112 via the oil passage 111.

In the first case, the first operation unit 200 drives and rotates the first hydraulic motor 201 in accordance with an operation position input to the first operation lever 210. Description to follow is an operation of the hydraulic pump when the first operation unit 200 drives and rotates the first hydraulic motor 201 in accordance with an operation position input to the first operation lever 210.

An operation position is input to the first operation lever 210. Upon receipt of the operation position, the first operation lever 210 generates an operation position signal that is dependent on the input operation position. The generated operation position signal is output from the first operation lever 210 to the signal transmission path 161, and input to the drive signal output circuit 220A via the signal transmission path 161.

The drive signal output circuit 220A computes the operation position signal as input thereto into a drive signal. In turn, the drive signal output circuit 220A outputs the drive signal to the signal transmission path 162. The electric motor 230 is driven and rotated at a rotational speed defined by the drive signal received. When a rotational speed difference is produced between the electric motor 230 and the first hydraulic motor 201, the first control valve 250, as described above, adjusts a quantity of the working oil flowing therethrough, viz., a quantity of the working oil supplied from the hydraulic pump 102 to the first hydraulic motor 201 via one of the oil passages 113 and 114 so that the rotational speeds of the electric motor 230 and the first hydraulic motor 201 are equal to each other, and in this state drives and rotates the first hydraulic motor 201. Therefore, the first hydraulic motor 201 rotates a rotational speed substantially equal to that of the electric motor 230. When the first hydraulic motor 201 is driven and rotated, the first hydraulic motor 201 is reduced in speed by the speed reduction mechanism 202, and then the rotation reduced in speed is transmitted to the load 203.

In this way, the first operation unit 200 drive and rotates the first hydraulic motor 201 in accordance with the operation position input to the first operation lever 210.

The working oil for driving and rotating the first hydraulic motor 201 passes through the other of the oil passages 113 and passage 114, and then through the first control valve 250, and returned to the tank 101 via the oil passage 115.

In the first case, the second operation unit 300 stops the rotation of the second hydraulic motor 301. Therefore, the second control valve 350 is at a neutral position. After passing the pressure control valve 150, the working oil goes again to the tank 101 by way of the oil passages 119, second control valve 350 and oil passage 125.

In the first case, a quantity of the working oil that the hydraulic pump 102 supplies is set to be 5% larger than that of the working oil for driving and rotating the first hydraulic motor 201. An operation of the hydraulic drive apparatus to set a quantity of the working oil supplied by the hydraulic pump 102 to be 5% larger than a quantity of the working oil for driving and rotating the first hydraulic motor 201, will be described.

The operation position signal is input to the supplying-oil adjust signal output circuit 220C via the signal transmission path 161.

A supplying-oil pressure signal output from the pressure sensor 131 and an operation position detect signal output from the pressure sensor 134 are input to the supplying-oil adjust signal output circuit 220C via a signal transmission path, not shown.

The supplying-oil adjust signal output circuit 220C judges that the second operation unit 300 stops the rotation of the second hydraulic motor 301, from the operation position detect signal as input, and computes a quantity of the working oil necessary for driving and rotating the first hydraulic motor 201 in accordance with the input operation position signal. Specifically, a capacity of the first hydraulic motor 201 is already known. As already described, the rotational speed of the first hydraulic motor 201 is determined by the operation position signal output from the first operation lever 210. Therefore, the supplying-oil adjust signal output circuit 220C multiplies a known capacity of the first hydraulic motor 201 by a rotational speed of the first hydraulic motor 201 that is obtained from the operation position signal, thereby producing a quantity of the working oil necessary for driving and rotating the first hydraulic motor 201. Then, the supplying-oil adjust signal output circuit 220C generates a supplying-oil adjust signal which causes the pump regulator 180 to adjust a quantity of the working oil that the hydraulic pump 102 supplies so that a quantity of the working oil that the hydraulic pump 102 supplies is 5% larger than of the working oil necessary for driving and rotating the first hydraulic motor 201.

The supplying-oil adjust signal that is generated by the supplying-oil adjust signal output circuit 220C is output to a signal transmission path 164, from the supplying-oil adjust signal output circuit 220C, and is input to the pump regulator 180 by way of the signal transmission path 164. The pump regulator 180 having received the supplying-oil adjust signal adjusts a quantity of the working oil that the hydraulic pump 102 supplies so that a quantity of the working oil that the hydraulic pump 102 is 5% larger than the working oil necessary for driving and rotating the first hydraulic motor 201.

In this way, a quantity of the working oil that the hydraulic pump 102 supplies is 5% larger than that of the working oil necessary for driving and rotating the first hydraulic motor 201.

In the first case, the supplying-oil pressure signal that is input to the supplying-oil adjust signal output circuit 220C is no used by the supplying-oil adjust signal output circuit 220C in order to generate a supplying-oil adjust signal.

In the first case, a pressure of the working oil supplied from the hydraulic pump 102 to the first control valve 250 is set to be higher than that of the working oil necessary for driving and rotating the first hydraulic motor 201 by 20kg/cm² or lower. Description will be given hereunder about an operation of the hydraulic drive apparatus to set the pressure of the working oil supplied from the hydraulic pump 102 to the first control valve 250 to be higher than that of the working oil necessary for driving and rotating the first hydraulic motor 201 by 20kg/cm² or lower.

An operation position signal is input from the first operation lever 210 to the pressure adjust signal output circuit 220B, from the signal transmission path 161.

The pressure sensor 131 detects a pressure of the working oil supplied from the hydraulic pump 102 to the first control valve 250, and generates a supplying-oil pressure signal defined by the detect pressure. The generated supplying-oil pressure signal is output from the pressure sensor 131to the signal transmission path, and through the signal transmission path to pressure adjust signal output circuit 220B.

Each of the pressure sensors 132 and 133 detects a pressure of the working oil for driving and rotating the first hydraulic motor 201, and generates a drive oil pressure signal defined by the detected pressure. The generated drive oil pressure signal is output to the signal transmission path (not shown) from each of those sensors 132 and 133, and passes through the signal transmission path to the pressure adjust signal output circuit 220B.

The pressure adjust signal output circuit 220B judges, by the input operation position signal, that the first operation unit 200 drives and rotates the first hydraulic motor 201, and computes a pressure of the working oil necessary for driving and rotating the first hydraulic motor 201 by use of the input drive oil pressure signal. In the embodiment, the pressure adjust signal output circuit 220B receives the drive oil pressure signals from the pressure sensors 132 and 133. The pressure adjust signal output circuit 220B judges that the pressure, which is the larger of the pressures obtained from the two drive oil pressure signals, is the pressure of the working oil for driving and rotating the first hydraulic motor 201. The pressure adjust signal output circuit 220B obtains a pressure of the working oil, which is supplied from the hydraulic pump 102 to the first control valve 250, from the supplying-oil pressure signal. The pressure adjust signal output circuit 220B generates a pressure adjust signal for adjusting a set pressure of the pressure control valve 150 so that a pressure of the working oil supplied from the hydraulic pump 102 to the first control valve 250 is higher than a pressure of the working oil necessary for driving and rotating the first hydraulic motor 201 by 20kg/cm² or lower.

The pressure adjust signal is generated by the pressure adjust signal output circuit 220B and output to the signal transmission path 163, and to the pressure control valve 150 via the signal transmission path 163. That is, the pressure adjust signal is input to the electromagnetic relief valve 152. The electromagnetic relief valve152 having received the pressure adjust signal adjusts the set pressure in accordance with the input pressure adjust signal, so that it adjusts the set pressure of the main relief valve 151 to be higher than the pressure of the working oil necessary for driving and rotating the first hydraulic motor 201 by a 20kg/cm². The main relief valve151 adjusts a pressure of the working oil supplied from the hydraulic pump 102 to the first control valve 250 to be lower than the set pressure, i.e., a pressure being higher than the pressure of the working oil necessary for driving and rotating the first hydraulic motor 201 by 20kg/cm² or lower.

In this way, the pressure of the working oil that is supplied from the hydraulic pump 102 to the first control valve 250 is set to be higher than the pressure of the working oil necessary for driving and rotating the first hydraulic motor 201 by 20kg/cm² or lower.

The set pressure of the pressure control valve 140 is set to be sufficiently high. In the first case, the set pressure of the pressure control valve 150 never exceeds the set pressure of the pressure control valve 140. The working oil never flows through the pressure control valve 140.

As described above, in the first case, a quantity of the working oil that the hydraulic pump 102 supplies is set to be 5% larger than the quantity of the working oil necessary for driving and rotating the first hydraulic motor 201. A pressure of the working oil supplied from the hydraulic pump 102 to the first control valve 250 is set to be higher than a pressure of the working oil necessary for driving and rotating the first hydraulic motor 201 by 20kg/cm² or lower.

A case (referred to as a second case) where the first operation unit 200 stops the rotation of the first hydraulic motor 201 and the second operation unit 300 drives and rotates the second hydraulic motor 301, will be described hereunder.

The hydraulic pump 102 supplies the working oil from the tank 101 to the oil passage 112 via the oil passage 111.

In the second case, an operation position for stopping the rotation of the first hydraulic motor 201 is input to the first operation lever 210. When the operation position for stopping the rotation of the first hydraulic motor 201 is input to the first operation lever 210, the drive signal output circuit 220A, as in the first case, outputs a drive signal to the electric motor 230 to stop its rotation. When the electric motor 230 stops its rotation, the first hydraulic motor 201, as described above, rotates at a rotational speed substantially equal to that of the electric motor 230. Therefore, the first hydraulic motor 201 also stops its rotation.

In the second case, the second operation unit 300 drives and rotates the second hydraulic motor 301 in accordance with the operation position input to the second operation lever 310. Description will be given about an operation of the hydraulic drive apparatus when the second operation unit 300 drives and rotates the second hydraulic motor 301 in accordance with an operation position input to the second operation lever 310.

An operation position is input to the second operation lever 310. When the operation position is input to the second operation lever 310, working oil flows through the operation oil passage 311 or 312 in accordance with the operation position input to the second operation lever 310. Then, the second control valve 350 adjusts a quantity of the working oil that comes in through the oil passages 121, in accordance with the operation oil flowing through the operation oil passage 311 or 312. The working oil having passed through the second control valve 350 passes through one of the oil passages 122 and 123, and drives and rotates the second hydraulic motor 301. When the second hydraulic motor 301 is driven to rotate, a rotation of the second hydraulic motor 301 is reduced in speed and transmitted to the load 303.

In this way, the second operation unit 300 drives and rotates the second hydraulic motor 301 in accordance with the operation position input to the second operation lever 310.

After driving and rotating the second hydraulic motor 301, the working oil passes the other of the oil passages 122 and 123 and through the second control valve 350, and returns to the tank 101 by way of the oil passage 124.

In the second case, a pressure of the working oil supplied from the hydraulic pump 102 to the second control valve 350 is set to be below a set pressure of the pressure control valve 140. An operation of the hydraulic drive apparatus to set a pressure of the working oil supplied from the hydraulic pump 102 to the second control valve 350 below a set pressure of the pressure control valve 140, will be described.

As described in the first case, the operation position signal, supplying-oil pressure signal drive oil pressure signal are input to the pressure adjust signal output circuit 220B.

The pressure adjust signal output circuit 220B judges from the input operation position signal that the first operation unit 200 stops the rotation of the first hydraulic motor 201. The pressure adjust signal output circuit 220B generates a pressure adjust signal which sets a set pressure of the pressure control valve 150 at O kg/cm², and inputs the generated pressure adjust signal to the pressure control valve 150 by way of the signal transmission path 163.

Accordingly, a pressure of the working oil supplied from hydraulic pump 102 to the first control valve 250, viz., a pressure of the working oil supplied from the hydraulic pump 102 to the second control valve 350, is a set pressure of the pressure control valve 140 or lower.

In this way, a pressure of the working oil supplied from the hydraulic pump 102 to the second control valve 350 is a set pressure of the pressure control valve 140 or lower.

In the second case, the supplying-oil pressure signal and the drive oil pressure signal that are input to the pressure adjust signal output circuit 220B are not used by the pressure adjust signal output circuit 220B for generating the pressure adjust signal.

The working oil having flowed through the pressure control valve 140 is supplied to the tank 101 via the oil passage 117.

In the second case, a quantity of the working oil that the hydraulic pump 102 supplies is set to be a maximum oil quantity at which the hydraulic pump 102 is capable of supplying the working oil. An operation of the hydraulic drive apparatus to set a quantity of the working oil that the hydraulic pump 102 supplies to be a maximum oil quantity at which the hydraulic pump 102 is capable of supplying the working oil, will be described.

As described in the first case, the operation position signal is input through the signal transmission path 161 to the supplying-oil adjust signal output circuit 220C, and the supplying-oil pressure signal and the operation position detect signal are input to the same by way of a signal transmission path, not shown.

The supplying-oil adjust signal output circuit 220C judges, by the input operation position detect signal, that the second operation unit 300 drives and rotates the second hydraulic motor 301, and computes the maximum oil quantity at which the hydraulic pump 102 is capable of supplying the working oil in accordance with the input supplying-oil pressure signal. The supplying-oil adjust signal output circuit 220C computes the maximum oil quantity at which the hydraulic pump 102 is capable of supplying the working oil, by use of a pressure of the working oil supplied from the hydraulic pump 102 to the first control valve 250, the pressure being presented by the supplying-oil pressure signal, and the limited horsepower of the engine for driving the hydraulic pump 102. Further, the supplying-oil adjust signal output circuit 220C generates a supplying-oil adjust signal, which causes the pump regulator 180 to adjust a quantity of the working oil that the hydraulic pump 102 supplies so that a quantity of the working oil that the hydraulic pump 102 supplies is equal to the maximum oil quantity at which the hydraulic pump 102 is capable of supplying the working oil.

The supplying-oil adjust signal generated by the supplying-oil adjust signal output circuit 220C is output from the supplying-oil adjust signal output circuit 220C to the signal transmission path 164, and input to the pump regulator 180 via the signal transmission path 164. The pump regulator 180, which receives the supplying-oil adjust signal, adjusts a quantity of the working oil that the hydraulic pump 102 supplies so that a quantity of the working oil that the hydraulic pump 102 supplies is equal to the maximum oil quantity at which the hydraulic pump 102 is capable of supplying-the working oil.

In this way, the quantity of the working oil that the hydraulic pump 102 supplies is set to be the maximum oil quantity at which the hydraulic pump 102 is capable of supplying the working oil.

In the second case, the operation position signal input to the supplying-oil adjust signal output circuit 220C is not used by the supplying-oil adjust signal output circuit 220C to generate the supplying-oil adjust signal.

As described above, in the second case, the pressure of the working oil supplied from the hydraulic pump 102 to the second control valve 350 is below the set pressure of the pressure control valve 140. The quantity of the working oil that the hydraulic pump 102 is set at the maximum oil quantity at which the hydraulic pump 102 can supply the working oil.

A case (referred to as a third case) where the first operation unit 200 drives and rotates the first hydraulic motor 201, and the second operation unit 300 drives and rotates the second hydraulic motor 301, will be described.

The hydraulic pump 102 supplies the working oil from the tank 101 through the oil passage 111 to the oil passage 112.

In the third case, as in the first case, the first operation unit 200 drives and rotates the first hydraulic motor 201 in accordance with the operation position input to the first operation lever 210.

In the third case, as in the first case, the second operation unit 300 drives and rotates the second operation lever 310 in accordance with the operation position input to the second operation lever 310.

In the third case, when a pressure of the working oil in the oil passages 119 is lower than the set pressure of the pressure control valve 150, a pressure of the working oil supplied through the oil passage 112 to the first control valve 250 is higher than a pressure of the working oil necessary for driving and rotating the first hydraulic motor 201 by 20kg/cm² or lower. When a pressure of the working oil in the oil passages 119 is higher than the set pressure of the pressure control valve 150, a pressure of the working oil supplied through the oil passage 112 to the first control valve 250 is substantially equal to a pressure of the working oil supplied through the oil passages 121 to the second control valve 350, and equal to a set pressure of the pressure control valve 140 or lower. This will be described in detail.

In the third case, the first operation unit 200 drives and rotates the first hydraulic motor 201. Therefore, as in the first case, a set pressure of the pressure control valve 150 is set to be higher than a pressure of the working oil necessary for driving and rotating the first hydraulic motor 201 by 20kg/cm², by the pressure adjust signal output circuit 220B. Specifically, when a pressure of the working oil supplied from the hydraulic pump 102. to the first control valve 250 is higher than a pressure of the working oil necessary for driving and rotating the first hydraulic motor 201 by 20kg/cm², the pressure adjust signal output circuit 220B causes the pressure control valve 150 to open the passage, and hence flows the working oil from the oil passage 118 to the oil passage 119 and lowers the pressure of the working oil.

Accordingly, when a pressure of the working oil in the oil passages 119 is lower than a set pressure of the pressure control valve 150, a pressure of the working oil supplied through the oil passage 112 to the first control valve 250 is lower than the set pressure of the pressure control valve 150, viz., lower than the pressure of the working oil necessary for driving and rotating the first hydraulic motor 201 by 20kg/cm² or lower. When the pressure of the working oil in the oil passages 119 is higher than the set pressure of the pressure control valve 150, the pressure of the working oil in the oil passage 118 is substantially equal to the pressure of the working oil in the oil passages 119. Therefore, a pressure of the working oil supplied through the oil passage 112to the first control valve 250 is substantially equal to the pressure of the working oil, and equal to the set pressure of the pressure control valve 140 or lower.

In the third case, the second operation unit 300 drives and rotates the second hydraulic motor 301. Accordingly, as in the second case, a quantity of the working oil is set at the maximum oil quantity at which the hydraulic pump 102 can supply the working oil, by the supplying-oil adjust signal output circuit 220C.

As described above, in the third case, when the pressure of the working oil in the oil passages 119 is lower than the set pressure of the pressure control valve 150, the pressure of the working oil supplied through the oil passage 112 to the first control valve 250 is higher than the pressure of the working oil necessary for driving and rotating the first hydraulic motor 201 by 20kg/cm² or lower. When the pressure of the working oil in the oil passages 119 is higher than the set pressure of the pressure control valve 150, the pressure of the working oil supplied through the oil passage 112 to the first control valve 250 is substantially equal to the pressure of the working oil supplied through the oil passages 121 to the second control valve 350, and equal to the set pressure of the pressure control valve 140 or lower. A quantity of the working oil that the hydraulic pump 102 supplies is set at the maximum oil quantity at which the hydraulic pump 102 can supply the working oil.

In the embodiment, in the first and third cases, the set pressure of the pressure control valve 150 is higher than the pressure of the working oil necessary for driving and rotating the first hydraulic motor 201 by 20kg/cm². In the embodiment, the predetermined pressure may be selected within a range of any other suitable values than 20kg/cm² if the range does not give rise to the wasting of the drive horsepower of the hydraulic pump 102. In the second case, the set pressure of the pressure control valve 150 is set at Okg/cm², but it may be selected within a range of other pressure values than Okg/cm² if the range allows the working oil in the oil passages 118 to substantially and freely flow to the oil passages 119.

In the embodiment, in the first case, a quantity of the working oil that the hydraulic pump 102 supplies is 5% larger than of the working oil necessary for driving and rotating the first hydraulic motor 201. The predetermined quantity may be selected within a range of other values of percentage than 5% if the range ensures substantially low flow loss. In the second and third cases, the quantity of the working oil supplied to the hydraulic pump 102 is set at the maximum oil quantity at which the hydraulic pump 102 can supply the working oil. However, it is not always exactly equal to the maximum oil quantity, but it may be near the maximum oil quantity and any value of quantity if it depends on a speed at which the second hydraulic motor 301 is driven and rotated.

In the embodiment, the second control valve 350 of the general purpose valve moves its position in response to the operation oil. The second control valve 350, which is constructed such that its position is moved by the operation oil, may take any other construction if it allows its position to be moved in response to the operation position input to the second operation lever 310.

While taking the form of the pressure sensor 134 in the embodiment, the operation position detecting means may take any other means if it is able to detect an operation position input to the second operation lever 310.

### <Sixth Embodiment>

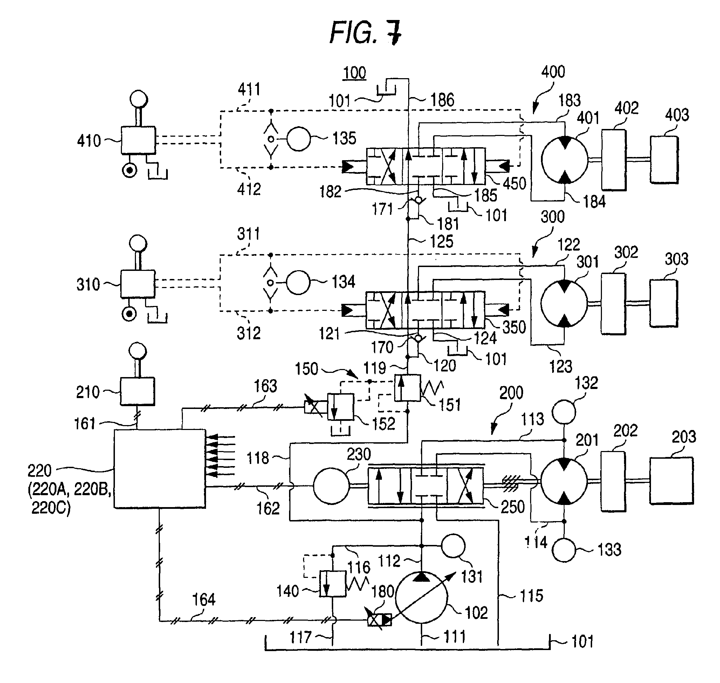

Fig. 7 is a hydraulic pressure circuit diagram showing a hydraulic drive apparatus 100, which is a sixth embodiment of the present invention.

The arrangement of the hydraulic drive apparatus 100 of the present embodiment is substantially the same as of the hydraulic drive apparatus 100 of the fifth embodiment except its arrangement to be described hereunder.

The hydraulic drive apparatus 100 of the embodiment uniquely includes an additional hydraulic motor 401 between the oil passage 125 and the tank 101. The additional hydraulic motor 401 is driven and rotated by working oil supplied thereto from the hydraulic pump 102 through a route of the oil passages 112, 118 and 119, the second control valve 350, and the oil passages 125, 181 and 182, and an oil passage 183 or 184.

The hydraulic drive apparatus 100 includes an additional operation unit 400 which is made up of an additional operation lever 410 as additional operation position inputting means to which an operation position is input, and an additional control valve 450 which allows the working oil supplied from the hydraulic pump 102 to the additional hydraulic motor 401 to flow therethrough, adjusts a quantity of the working oil flowing therethrough in accordance with an operation position input by the additional operation lever 410, and adjusts a quantity of the working oil supplied from the hydraulic pump 102 to the additional hydraulic motor 401, whereby the additional hydraulic motor 401 is driven in accordance with the operation position input to the additional operation lever 410.

The oil passages 181 and 182 intercommunicate with each other through a check valve 171. A rotation of the additional hydraulic motor 401 is reduced in speed by a speed reduction means 402 and transmitted to a load 403. The working oil have driven and rotated the additional hydraulic motor 401 passes through the additional hydraulic motor 401, passes again through the oil passage 183 or 184, and returns to the tank 101 via the oil passage 185. Of the working oil flowing through the oil passage 125, the working oil other than that supplied to the additional hydraulic motor 401 flows through the additional control valve 450 and an oil passage 186, and returns to the tank 101.

The additional control valve 450 is a general purpose valve.

The additional control valve 450 is arranged such that a quantity of the working oil flowing therethrough is adjusted in accordance with the operation position input to the additional operation lever 410. To be more specific, the additional operation lever 410 supplies a quantity of the working oil, which depends on the input operation position. The additional control valve 450 receives the operation position from the additional operation lever 410 through operation oil passage 411 or 412, and adjusts the working oil flowing therethrough in accordance with a quantity of the operation oil supplied.

A pressure sensor 135 as operation position detecting means detects an operation position input to the additional operation lever 410. Specifically, the pressure sensor 135 detects a pressure of the operation oil, which is the higher of the operation oils flowing through operation oil passages 411 and 412, and detects a pressure of the operation oil supplied from the additional operation lever 410 to the additional control valve 450 by the former pressure detection.

As recalled, in the fifth embodiment, the supplying-oil adjust signal output circuit 220C judges by the operation position detect signal input thereto, that the second operation unit 300 stops the rotation of the second hydraulic motor 301. In this connection, the present embodiment, the supplying-oil adjust signal output circuit 220C judges, by each of the operation position detect signal input thereto, that the second operation unit 300 and the additional operation unit 400 stop the second hydraulic motor 301 and the additional hydraulic motor 401, respectively. Also in the fifth embodiment, the supplying-oil adjust signal output circuit 220C judges, by the operation position detect signal input thereto, that the second operation unit 300 stops the rotation of the second hydraulic motor 301. In this connection, in the embodiment, the supplying-oil adjust signal output circuit 220C judges, by each position detect signal input thereto, that either of the second operation unit 300 and the additional operation unit 400 drives and rotates either of the second hydraulic motor 301 and the additional hydraulic motor 401.

Accordingly, the operation of the hydraulic drive apparatus 100 of the present embodiment is substantially the same as of the hydraulic drive apparatus 100 of the fifth embodiment except that the additional hydraulic motor 401 may be operated.

In the hydraulic drive apparatus 100 of the present embodiment, it is impossible to simultaneously operate the second hydraulic motor 301 and the additional hydraulic motor 401.

### <Seventh Embodiment>

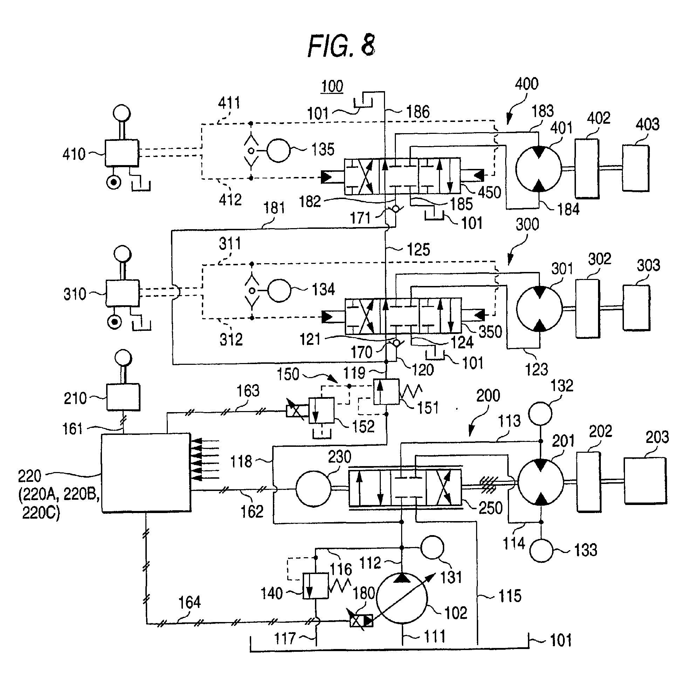

Fig. 8 is a hydraulic pressure circuit diagram showing a hydraulic drive apparatus 100 which is a seventh embodiment of the present invention.

An arrangement of the hydraulic drive apparatus 100 of this embodiment will be described.

In operation of the hydraulic drive apparatus 100 of this embodiment the second hydraulic motor 301 and the additional hydraulic motor 401 may simultaneously be operated.

## Claims

1. A hydraulic drive apparatus for driving and rotating a drive rotary member (43) in accordance with an operation position input from operation position inputting means (21), the apparatus comprising:
- the drive rotary member (43);
- working oil supplying means (42) for supplying working oil to drive and rotate the drive rotary member (43);
- rotation control means (20) for controlling a quantity of the working oil;
- drive oil pressure detecting means (47,48) for detecting a pressure of the working oil, generating and outputting a drive oil pressure signal;
- supplying oil pressure detecting means (49) for detecting a pressure of the working oil, generating and outputting a supplying-oil pressure signal;
- a main relief valve (45) for regulating a pressure of the working oil supplied from the working oil supplying means (42) to a working oil control means (25) to be equal to or lower than a set pressure;
wherein the rotation control means (20) includes:
- the operation position inputting means (21) for inputting an operation position;
- operation-position signal outputting means (22) for generating and outputting an operation position signal depending on the operation position input;
- drive signal outputting means (23A) for computing and converting the operation position signal output into a drive signal; and
- working oil control means (25) for controlling a quantity of the working oil; **characterized in that** the apparatus further comprises an electromagnetic relief valve (46) for varying the set pressure of the main relief valve (45) by varying a set pressure thereof; and the rotation control means (20) includes an electric motor (24) driven and rotated at a speed and a quantity of rotation depending on the drive signal output from the drive signal outputting means (23A), wherein the drive rotary member (43) is mechanically coupled to the working oil control means (25) and is adapted to be driven and rotated following of the rotation of the electric motor (24); and oil pressure control means (23B) for receiving the supplying-oil pressure signal and the drive oil pressure signal and outputting a current to the electromagnetic relief valve (46) to thereby control the pressure of the working oil supplied from the working oil supplying means (42) to be higher, by a predetermined pressure, than the pressure of the working oil for driving and rotating the drive rotary member (43).

2. A hydraulic drive apparatus according to claim 1, **characterized by** supplying oil quantity control means (51) for controlling a quantity of the working oil that the working oil supplying means (42) supplies; and supplying oil quantity signal outputting means (23C) for receiving the operation position signal output from the operation-position signal outputting means (22), generating a supplying oil quantity signal from the input operation position signal, and outputting the supplying oil quantity signal to the supplying oil quantity control means (51), thereby controlling the quantity of the working oil supplied to the supplying oil quantity control means (51) by the working oil supplying means (42).

3. A hydraulic drive apparatus according to claim 1 or 2, **characterized in that** the drive oil pressure detecting means (47,48) includes a pressure gauge (47) for detecting the pressure of the working oil supplied from the working oil control means (42) to the drive rotary member (43), and another pressure gauge (48) for detecting the pressure of the working oil supplied from the drive rotary member (43) to the working oil control means (25).

4. A hydraulic drive apparatus according to one of the claims 1 to 3, **characterized in that** when the pressure of the working oil detected by the drive oil pressure detecting means (47,48) is equal to or higher than a predetermined pressure, the oil pressure control means (23B) feeds current of a predetermined value to the electromagnetic relief valve (46).

5. A hydraulic drive apparatus according to one of the claims 1 to 4, **characterized by** a check valve (50) for preventing a reverse flow of the working oil when the working oil whose pressure is regulated to be equal to or lower than the set pressure by the main relief valve (45) is supplied from the working oil supplying means (42) to the working oil control means (25).

6. A hydraulic drive apparatus according to claim 1, **characterized by**
an additional drive rotary member (143) driven by hydraulic pressure;
additional rotation control means (120) including:
an additional electric motor (124) driven at a speed and a quantity of rotation depending on the drive signal output from the drive signal outputting means (23A), and
additional working oil control means (125) for receiving from the working oil supplying means (42) the working oil being equal in pressure to the working oil supplied from the working oil supplying means (42) to the working oil control means (25), and controlling a quantity of the working oil supplied from the working oil supplying means (42) to the additional drive rotary member (143) so that the additional drive rotary member (143) is driven and rotated depending on rotation of the additional electric motor (124); and
additional drive oil pressure detecting means (147,148) for detecting a pressure of the working oil for driving and rotating the additional drive rotary member (143), and generating and outputting a drive oil pressure signal depending on the pressure thus detected, wherein the oil pressure control means (23B) receives the supplying-oil pressure signal output from the supplying oil pressure detect means (49), the drive oil pressure signal output from the drive oil pressure detecting means (47, 48), and the drive oil pressure signal output from the additional drive oil pressure detecting means (147,148), and outputs the current to the electromagnetic relief valve (46) to vary the set pressure of the electromagnetic relief valve (46) and thus the set pressure of the main relief valve (45), thereby controlling the pressure of the working oil supplied from the working oil supplying means (42) to be higher, by the predetermined pressure, than a higher one of the pressure of the working oil for driving and rotating the drive rotary member (43) and the pressure of the working oil for driving and
rotating the additional drive rotary member (143).

7. A hydraulic drive apparatus according to claim 6, **characterized in that** the additional rotation control means (120) includes:
additional operation position inputting means (121) for inputting an operation position;
additional operation-position signal outputting means (122) for generating and
outputting an operation position signal depending on the operation position input to the additional operation position inputting means (121); and
additional drive signal outputting means (23A) for computing and converting the operation position signal output from the additional operation-position signal outputting means (122) into a drive signal to be output therefrom, wherein the additional electric motor (124) is driven and rotated at a speed and a quantity of rotation depending on the drive signal output from the additional drive signal outputting means (23A).

8. A hydraulic drive apparatus according to claim 6 or 7, **characterized by** supplying oil quantity control means (51) for controlling a quantity of the working oil that the working oil supplying means (42) supplies; and supplying oil quantity signal outputting means (23C) for receiving the operation position signal output from the operation-position signal outputting means (22), and the operation position signal output from the additional operation-position signal outputting means (122), generating a supplying oil quantity signal from the thus input two operation position signals, and outputting the supplying oil quantity signal to the supplying oil quantity control means (51), thereby allowing the supplying oil quantity control means (51) to control the quantity of the working oil that the working oil supplying means (42) supplies.

## Patentansprüche

1. Hydraulische Antriebsvorrichtung zum Antreiben und Drehen eines Antriebs-Drehelementes (43) entsprechend einer Arbeitsposition, die von einer Arbeitspositions-Eingabeeinrichtung (21) eingegeben wird, wobei die Vorrichtung umfasst:
- das Antriebs-Drehelement (43);
- eine Arbeitsöl-Zuführeinrichtung (42) zum Zuführen von Arbeitsöl zum Antreiben und Drehen des Antriebs-Drehelementes (43);
- eine Drehsteuereinrichtung (20) zum Steuern einer Menge des Arbeitsöls;
- eine Antriebsöldruck-Erfassungseinrichtung (47, 48) zum Erfassen eines Drucks des Arbeitsöls sowie zum Erzeugen und Ausgeben eines Antriebsöldruck-Signals;
- eine Zufuhröldruck-Erfassungseinrichtung (49) zum Erfassen eines Drucks des Arbeitsöls sowie zum Erzeugen und Ausgeben eines Zuführöl-Drucksignals;
- ein Haupt-Entlastungsventil (45) zum Regulieren eines Drucks des von der Arbeitsöl-Zuführeinrichtung (42) einer Arbeitsöl-Steuereinrichtung (25) zugeführten Arbeitsöls, so dass er einem Solldruck gleich ist oder niedriger ist als dieser;
wobei die Drehsteuereinrichtung (20) enthält:
- die Arbeitspositions-Eingabeeinrichtung (21) zum Eingeben einer Arbeitsposition;
- eine Arbeitspositionssignal-Ausgabeeinrichtung (22) zum Erzeugen und Ausgeben eines Arbeitspositionssignals in Abhängigkeit von der Arbeitspositionseingabe;
- eine Antriebssignal-Ausgabeeinrichtung (23A) zum Berechnen und Umwandeln der Arbeitspositionssignal-Ausgabe in ein Antriebssignal; und
- eine Arbeitsöl-Steuereinrichtung (25) zum Steuern einer Menge des Arbeitsöls;
**dadurch gekennzeichnet, dass** die Vorrichtung des Weiteren ein elektromagnetisches Entlastungsventil (46) zum Ändern des Soll-Drucks des Haupt-Entlastungsventils (45) durch Ändern eines Soll-Drucks desselben umfasst und die Dreh-Steuereinrichtung (20) einen Elektromotor (24), der mit einer Geschwindigkeit und einem Maß der Drehung angetrieben und gedreht wird, die von dem Antriebssignal abhängen, das von der Antriebssignal-Ausgabeeinrichtung (23A) ausgegeben wird, wobei das Antriebs-Drehelement (43) mechanisch mit der Arbeitsöl-Steuereinrichtung (25) gekoppelt und so eingerichtet ist, dass es der Drehung des Elektromotors (24) folgend angetrieben und gedreht wird; und eine Öldruck-Steuereinrichtung (23B) zum Empfangen des Zufuhröl-Drucksignals sowie des Antriebsöldruck-Signals und zum Ausgeben eines Stroms an das elektromagnetische Entlastungsventil (46) enthält, um so den Druck des von der Arbeitsöl-Zuführeinrichtung (42) zugeführten Arbeitsöls so zu steuern, dass er um einen vorgegebenen Druck höher ist als der Druck des Arbeitsöls zum Antreiben und Drehen des Antriebs-Drehelementes (43).

2. Hydraulische Antriebsvorrichtung nach Anspruch 1, **gekennzeichnet durch** eine Zuführölmengen-Steuereinrichtung (51) zum Steuern einer Menge des Arbeitsöls, die die Arbeitsöl-Zuführeinrichtung (42) zuführt; und eine Zuführölmengensignal-Ausgabeeinrichtung (23C) zum Empfangen des von der Arbeitspositionssignal-Ausgabeeinrichtung (22) ausgegebenen Arbeitspositionssignals, zum Erzeugen eines Zuführölmengen-Signals aus dem eingegebenen Arbeitspositionssignal und zum Ausgeben des Zuführölmengen-Signals an die Zuführölmengen-Steuereinrichtung (51), um so die der Zuführölmengen-Steuereinrichtung (51) **durch** die Arbeitsöl-Zuführeinrichtung (42) zugeführte Menge des Arbeitsöls zu steuern.

3. Hydraulische Antriebsvorrichtung nach Anspruch 1 oder 2, **dadurch gekennzeichnet, dass** die Antriebsöldruck-Erfassungseinrichtung (47, 48) einen Druckmesser (47) zum Erfassen des Drucks des von der Arbeitsöl-Steuereinrichtung (42) dem Antriebs-Drehelement (43) zugeführten Arbeitsöls und einen weiteren Druckmesser (48) zum Erfassen des Drucks des von dem Antriebs-Drehelement (43) der Arbeitsöl-Steuereinrichtung (25) zugeführten Arbeitsöls enthält.

4. Hydraulische Antriebsvorrichtung nach einem der Ansprüche 1 bis 3, **dadurch gekennzeichnet, dass**, wenn der durch die Antriebsöldruck-Erfassungseinrichtung (47, 48) erfasste Druck des Arbeitsöls einem vorgegebenen Druck gleich ist oder höher ist als dieser, die Öldruck-Steuereinrichtung (22B) dem elektromagnetischen Entlastungsventil (46) Strom eines vorgegebenen Wertes zuführt.

5. Hydraulische Antriebsvorrichtung nach einem der Ansprüche 1 bis 4, **gekennzeichnet durch** ein Rückschlagventil (50), das einen umgekehrten Strom des Arbeitsöls verhindert, wenn das Arbeitsöl, dessen Druck **durch** das Haupt-Entlastungsventil (45) so reguliert wird, dass er dem Soll-Druck gleich ist oder niedriger ist als dieser von der Arbeitsöl-Zuführeinrichtung (43) der Arbeitsöl-Steuereinrichtung (25) zugeführt wird.

6. Hydraulische Antriebsvorrichtung nach Anspruch 1, **gekennzeichnet durch**:
ein zusätzliches Antriebs-Drehelement (143), das **durch** Hydraulikdruck angetrieben wird;
eine zusätzliche Dreh-Steuereinrichtung (120), die enthält;
einen zusätzlichen Elektromotor (124), der mit einer Geschwindigkeit und einem Maß der Drehung angetrieben wird, die von dem von der Antriebssignal-Ausgabeeinrichtung (21A) ausgegebenen Antriebssignal abhängen, und
eine zusätzliche Arbeitsöl-Steuereinrichtung (125) zum Empfangen des Arbeitsöls von der Arbeitsöl-Zuführeinrichtung (42), dessen Druck dem des Arbeitsöls gleich ist, das von der Arbeitsöl-Zuführeinrichtung (42) der Arbeitsöl-Steuereinrichtung (25) zugeführt wird, und zum Steuern einer Menge des Arbeitsöls, die von der Arbeitsöl-Zuführeinrichtung (42) dem zusätzlichen Antriebs-Drehelement (143) zugeführt wird, so dass das zusätzliche Antriebs-Drehelement (143) in Abhängigkeit von Drehung des zusätzlichen Elektromotors (124) angetrieben und gedreht wird; und
eine zusätzliche Antriebsöldruck-Erfassungseinrichtung (147, 148) zum Erfassen eines Drucks des Arbeitsöls zum Antreiben und Drehen des zusätzlichen Antriebs-Drehelementes (143) sowie zum Erzeugen und Ausgeben eines Antriebsöldruck-Signals, das von dem so erfassten Druck abhängt, wobei die Öldruck-Steuereinrichtung (23B) das von der Zuführöldruck-Erfassungseinrichtung (49) ausgegebene Zuführöldruck-Signal, das von der Antriebsöldruck-Erfassungseinrichtung (47, 48) ausgegebene Antriebsöldruck-Signal sowie das von der zusätzlichen Antriebsöldruck-Erfassungseinrichtung (147, 148) ausgegebene Antriebsöldruck-Signal empfängt und den Strom an das elektromagnetische Entlastungsventil (46) ausgibt, um den Soll-Druck des elektromagnetischen Entlastungsventils (46) und so den Soll-Druck des Haupt-Entlastungsventils (45) zu ändern und damit den Druck des von der Arbeitsöl-Zuführeinrichtung (42) zugeführten Arbeitsöls so zu steuern, dass er um den vorgegebenen Druck höher ist als der Druck des Arbeitsöls zum Antreiben und Drehen des Antriebs-Drehelementes (43) oder der Druck des Arbeitsöls zum Antreiben und Drehen des zusätzlichen Antriebs-Drehelements (143).

7. Hydraulische Antriebsvorrichtung nach Anspruch 6, **dadurch gekennzeichnet, dass** die zusätzliche Drehsteuereinrichtung (120) enthält:
eine zusätzliche Arbeitspositions-Eingabeeinrichtung (121) zum Eingeben einer Arbeitsposition;
eine zusätzliche Arbeitspositionssignal-Ausgabeeinrichtung (122) zum Erzeugen und Ausgeben eines Arbeitspositionssignals in Abhängigkeit von der in die zusätzliche Arbeitspositions-Eingabeeinrichtung (121) eingegebenen Arbeitsposition; und
eine zusätzliche Antriebssignal-Ausgabeeinrichtung (23A) zum Berechnen und Umwandeln des von der zusätzlichen Arbeitspositionssignal-Ausgabeeinrichtung (122) ausgegebenen Arbeitspositionssignals in ein Antriebssignal, das von ihr ausgegeben wird, wobei der zusätzliche Elektromotor (124) mit einer Geschwindigkeit und einem Maß der Drehung angetrieben und gedreht wird, die von dem von der zusätzlichen Antriebssignal-Ausgabeeinrichtung (23A) ausgegebenen Antriebssignal abhängen.

8. Hydraulische Antriebsvorrichtung nach Anspruch 6 oder 7, **gekennzeichnet durch** eine Zuführölmengen-Steuereinrichtung (51) zum Steuern einer Menge des Arbeitsöls, die die Arbeitsöl-Zuführeinrichtung (42) zuführt, und eine Zuführölmengen-Signal-Ausgabeeinrichtung (23C) zum Empfangen des von der Arbeitspositionssignal-Ausgabeeinrichtung (22) ausgegebenen Arbeitspositions-Signals sowie des von der zusätzlichen Arbeitspositionssignal-Ausgabeeinrichtung (122) ausgegebenen Arbeitspositionssignals, zum Erzeugen eines Zuführölmengen-Signals aus den so eingegebenen zwei Arbeitspositionssignalen und zum Ausgeben des Zuführölmengen-Signals an die Zuführölmengen-Steuereinrichtung (51), so dass die Zuführölmengen-Steuereinrichtung (51) die Menge des Arbeitsöls steuern kann, die die Arbeitsöl-Zuführeinrichtung (42) zuführt.

## Revendications

1. Dispositif d'entraînement hydraulique destiné à entraîner et mettre un rotation un élément rotatif d'entraînement (43) selon une entrée de position de fonctionnement provenant de moyens d'entrée de position de fonctionnement (21), le dispositif comprenant :
- l'élément rotatif d'entraînement (43) ;
- des moyens d'alimentation en huile (42) destinés à fournir de l'huile pour entraîner et mettre en rotation l'élément rotatif d'entraînement (43) ;
- des moyens de commande de rotation (20) destinés à commander une quantité de l'huile ;
- des moyens de détection de pression d'huile d'entraînement (47, 48) destinés à détecter une pression de l'huile, générer et émettre un signal de pression d'huile d'entraînement ;
- des moyens de détection de pression d'huile d'alimentation (49) destinés à détecter une pression de l'huile, générer et émettre un signal de pression d'huile d'alimentation ;
- une soupape de décharge principale (45) destinée à réguler une pression de l'huile fournie depuis les moyens d'alimentation en huile (42) vers des moyens de commande d'huile (25) pour qu'elle soit égale ou inférieure à une pression définie ;
dans lequel les moyens de commande de rotation (20) comprennent :
- les moyens d'entrée de position de fonctionnement (21) destinés à entrer une position de fonctionnement ;
- des moyens d'entrée de signal de position de fonctionnement (22) destinés à générer et émettre un signal de position de fonctionnement selon l'entrée de position de fonctionnement ;
- des moyens d'émission de signal d'entraînement (23A) destinés à calculer et convertir le signal de position de fonctionnement émis en un signal d'entraînement ;
- des moyens de commande d'huile (25) destinés à commander une quantité de l'huile ;
**caractérisé en ce que** le dispositif comprend en outre une soupape de décharge électromagnétique (46) destinée à varier la pression définie de la soupape de décharge principale (45) en variant une pression définie de celle-ci ; et les moyens de commande de rotation (20) comprennent un moteur électrique (24) entraîné et mis en rotation à une vitesse et une quantité de rotation selon le signal d'entraînement émis depuis les moyens d'émission de signal d'entraînement (23A), dans lequel l'élément rotatif d'entraînement (43) est couplé mécaniquement aux moyens de commande d'huile (25) et est adapté pour être entraîné et mis en rotation en suivant la rotation du moteur électrique (24) ; et des moyens de commande de pression d'huile (23B) destinés à recevoir le signal de pression d'huile d'alimentation et le signal de pression d'huile d'entraînement et émettre un courant vers la soupape de décharge électromagnétique (46) pour de ce fait commander la pression de l'huile fournie en provenance des moyens d'alimentation en huile (42) pour qu'elle soit supérieure, d'une pression prédéterminée, à la pression de l'huile destinée à entraîner et mettre en rotation l'élément rotatif d'entraînement (43).

2. Dispositif d'entraînement hydraulique selon la revendication 1, **caractérisé par** des moyens de commande de quantité d'huile d'alimentation (51) destinés à commander une quantité de l'huile que les moyens d'alimentation en huile (42) fournissent ; et des moyens d'émission de signal de quantité d'huile d'alimentation (23C) destinés à recevoir le signal de position de fonctionnement émis en provenance des moyens d'émission de signal de position de fonctionnement (22), générer un signal de quantité d'huile d'alimentation en provenance du signal de position de fonctionnement, et émettre le signal de quantité d'huile d'alimentation vers les moyens de commande de quantité d'huile d'alimentation (51), commandant de ce fait la quantité de l'huile fournie aux moyens de commande de quantité d'huile d'alimentation (51) par les moyens d'alimentation en huile (42).

3. Dispositif d'entraînement hydraulique selon la revendication 1 ou 2, **caractérisé en ce que** les moyens de détection de pression d'huile d'entraînement (47, 48) comprend une jauge de pression (47) destinée à détecter la pression de l'huile fournie depuis les moyens de commande d'huile (42) vers l'élément rotatif d'entraînement (43), et une autre jauge de pression (48) destinée à détecter la pression de l'huile fournie depuis l'élément rotatif d'entraînement (43) vers les moyens de commande d'huile (25).

4. Dispositif d'entraînement hydraulique selon l'une quelconque des revendications 1 à 3, **caractérisé en ce que** lorsque la pression de l'huile détectée par les moyens de détection de pression d'huile d'entraînement (47, 48) est égale ou supérieure à une pression prédéterminée, les moyens de commande de pression d'huile (23B) amène un courant d'une valeur prédéterminée vers la soupape de décharge électromagnétique (46).

5. Dispositif d'entraînement hydraulique selon l'une quelconque des revendications 1 à 4, **caractérisé par** un clapet anti-retour (50) destiné à empêcher un écoulement inverse de l'huile lorsque l'huile dont la pression est régulée pour être égale ou inférieure à la pression définie par la soupape de décharge principale (45) est fournie depuis les moyens d'alimentation en huile (42) vers les moyens de commande d'huile (25).

6. Dispositif d'entraînement hydraulique selon la revendication 1, **caractérisé par**
un élément rotatif d'entraînement supplémentaire (143) entraîné par une pression hydraulique ;
des moyens de commande de rotation supplémentaires (120) comprenant :
un moteur électrique supplémentaire (124) entraîné à une vitesse et une quantité de rotation selon le signal d'entraînement émis depuis les moyens d'émission de signal d'entraînement (23A), et
des moyens de commande d'huile supplémentaires (125) destinés à recevoir en provenance des moyens d'alimentation en huile (42) l'huile qui est égale en pression à l'huile fournie en provenance des moyens d'alimentation en huile (42) vers les moyens de commande d'huile (25), et commander une quantité de l'huile fournie en provenance des moyens d'alimentation en huile (42) vers l'élément rotatif d'entraînement supplémentaire (143) de sorte que l'élément rotatif d'entraînement supplémentaire (143) est entraîné et tourné selon la rotation du moteur électrique supplémentaire (124) ; et
des moyens de détection de pression d'huile d'entraînement supplémentaires (147, 148) destinés à détecter une pression de l'huile pour entraîner et mettre en rotation l'élément rotatif d'entraînement supplémentaire (143) et générer et émettre un signal de pression d'huile d'entraînement selon la pression ainsi détectée, dans lequel les moyens de commande de pression d'huile (23B) reçoivent le signal de pression d'huile d'alimentation émis en provenance des moyens de détection de pression d'huile d'alimentation (49), le signal de pression d'huile d'entraînement émis en provenance des moyens de détection de pression d'huile d'entraînement (47, 48), et le signal de pression d'huile d'entraînement émis en provenance des moyens de détection de pression d'huile d'entraînement supplémentaires (147, 148), et émet le courant vers la soupape de décharge électromagnétique (46) pour varier la pression définie de la soupape de décharge électromagnétique (46) et ainsi la pression définie de la soupape de décharge principale (45), commandant de ce fait la pression de l'huile fournie en provenance des moyens d'alimentation en huile (42) pour qu'elle soit supérieure, de la pression prédéterminée à une supérieure de la pression de l'huile destinée à entraîner et mettre en rotation l'élément rotatif d'entraînement (43) et de la pression de l'huile destinée à entraîner et mettre en rotation l'élément rotatif d'entraînement supplémentaire (143).

7. Dispositif d'entraînement hydraulique selon la revendication 6, **caractérisé en ce que** les moyens de commande de rotation supplémentaires (120) comprennent :
des moyens d'entrée de position de fonctionnement supplémentaires (121) destinés à entrer une position de fonctionnement ;
des moyens d'émission de signal de position de fonctionnement supplémentaires (122) destinés à générer et émettre un signal de position de fonctionnement selon l'entrée de position de fonctionnement vers les moyens d'entrée de position de fonctionnement supplémentaires (121) ; et
des moyens d'émission de signal d'entraînement supplémentaires (23A) destinés à calculer et convertir le signal de position de fonctionnement émis depuis les moyens d'émission de signal de position de fonctionnement supplémentaires (122) en un signal d'entraînement devant être émis depuis ceux-ci, dans lesquels le moteur électrique supplémentaire (124) est entraîné et mis en rotation à une vitesse et une quantité de rotation selon le signal d'entraînement émis depuis les moyens d'émission de signal d'entraînement supplémentaires (23A).

8. Dispositif d'entraînement hydraulique selon la revendication 6 ou 7, **caractérisé par**
des moyens de commande de quantité d'huile d'alimentation (51) destinés à commander une quantité de l'huile que les moyens d'alimentation en huile (42) fournissent ; et des moyens d'émission de signal de quantité d'huile d'alimentation (23C) destinés à recevoir le signal de position de fonctionnement émis depuis les moyens d'émission de signal de position de fonctionnement (22), et le signal de position de fonctionnement émis depuis les moyens d'émission de signal de position de fonctionnement supplémentaires (122), générer un signal de quantité d'huile d'alimentation à partir des deux signaux de position de fonctionnement ainsi entrés, et émettre le signal de quantité d'huile d'alimentation vers les moyens de commande de quantité d'huile d'alimentation (51), permettant de ce fait aux moyens de commande de quantité d'huile d'alimentation (51) de commander la quantité de l'huile fournie par les moyens d'alimentation en huile (42).
